(19)

Europäisches
Patentamt
European
Patent Office
Office européen
des brevets

(11)  **EP 3 923 201 A1**

(12)  **EUROPEAN PATENT APPLICATION**

(43) Date of publication:
15.12.2021  Bulletin 2021/50

(51) Int Cl.:
*G06N 3/04* (2006.01)          *G06N 3/06* (2006.01)

(21) Application number: 21153747.7

(22) Date of filing: 27.01.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 08.06.2020  KR 20200069100

(71) Applicant: **Samsung Electronics Co., Ltd.**
**Suwon-si 16677 (KR)**

(72) Inventors:
• KIM, Hyunsoo
  **Suwon-si, Gyeonggi-do 16678 (KR)**
• KWON, Soonwan
  **Suwon-si, Gyeonggi-do 16678 (KR)**

(74) Representative: **Grünecker Patent- und Rechtsanwälte PartG mbB Leopoldstraße 4 80802 München (DE)**

(54)  **APPARATUS AND METHOD WITH NEURAL NETWORK**

(57)    A neural network-implementing neuromorphic device includes: a memory configured to store one or more instructions; an on-chip memory comprising a crossbar array circuit including synapse circuits; and one or more processors configured to, by executing instructions to drive a neural network, store binary weight values of the neural network in the synapse circuits, obtain an input feature map from the memory, convert the input feature map into temporal domain binary vectors, provide the temporal domain binary vectors as input values of the crossbar array circuit, and output an output feature map by performing, using the crossbar array circuit, a convolution computation between the binary weight values and the temporal domain binary vectors.

FIG. 1

**Description**

BACKGROUND

1. Field

The following description relates to an apparatus and method with a neural network.

2. Description of Related Art

A memory-oriented neural network device may refer to computational hardware. Such memory-oriented neural network device may analyze input data and extract valid information by using neural networks in various types of electronic systems.

However, such neural network devices, for example, do not efficiently process computations to analyze a large amount of input data in real time using a neural network and extract desired information.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a neural network-implementing neuromorphic device includes: a memory configured to store one or more instructions; an on-chip memory comprising a crossbar array circuit including synapse circuits; and one or more processors configured to, by executing instructions to drive a neural network, store binary weight values of the neural network in the synapse circuits, obtain an input feature map from the memory, convert the input feature map into temporal domain binary vectors, provide the temporal domain binary vectors as input values of the crossbar array circuit, and output an output feature map by performing, using the crossbar array circuit, a convolution computation between the binary weight values and the temporal domain binary vectors.

For the outputting of the output feature map, the one or more processors may be configured to output the output feature map by performing batch normalization on a result of the convolution computation.

For the performing of the batch normalization, the one or more processors may be configured to calculate a modified scale value by multiplying an initial scale value of the batch normalization by an average value of absolute values of initial weight values and dividing a result thereof by a number of elements included in each temporal domain binary vector, and perform the batch normalization based on the modified scale value.

For the converting of the input feature map, the one or more processors may be configured to convert the input feature map into the temporal domain binary vectors based on quantization levels of the input feature map.

For the converting of the input feature map, the one or more processors may be configured to divide a range between a maximum value and a minimum value determined for the temporal domain binary vectors to be input to the neural network by N quantization levels, wherein N is a natural number, and convert activations of the input feature map into the temporal domain binary vectors based on the quantization levels to which the activations correspond.

For the dividing of the range, the one or more processors may be configured to divide the range between the maximum value and the minimum value into non-linear quantization levels.

For the outputting of the output feature map, the one or more processors may be configured to perform a multiplication computation by multiplying each of bias values of the neural network by the initial scale value, and outputting the output feature map by determining the output feature map based on a result of the multiplication computation.

For the outputting of the output feature map, the one or more processors may be configured to output the output feature map by performing the batch normalization on a result of the convolution computation and applying an activation function to a result of the batch normalization.

In another general aspect, a neural network device includes: a memory configured to store one or more instructions; and one or more processors configured to, by executing instructions to drive a neural network, obtain binary weight values of the neural network and an input feature map from the memory, convert the input feature map into temporal domain binary vectors, and output an output feature map by performing a convolution computation between the binary weight values and the temporal domain binary vectors.

For the outputting of the output feature map, the one or more processors may be configured to output the output feature map by performing batch normalization on a result of the convolution computation.

For the performing of the batch normalization, the one or more processors may be configured to calculate a modified scale value by multiplying an initial scale value of the batch normalization by an average value of absolute values of initial weight values and dividing a result thereof by a number of elements included in each temporal domain binary vector, and perform the batch normalization based on the modified scale value.

For the converting of the input feature map, the one or more processors may be configured to convert the input feature map into the temporal domain binary vectors based on quantization levels of the input feature map.

For the converting of the input feature map, the one or more processors may be configured to divide a range between a maximum value and a minimum value determined for the temporal domain binary vectors to be input to the neural network N quantization levels, wherein N is a natural number, and convert activations of the input feature map into the temporal domain binary vectors based on the quantization levels to which the activations correspond.

For the dividing of the range, the one or more processors may be configured to divide the range between the maximum value and the minimum value into non-linear quantization levels.

For the outputting of the output feature map, the one or more processors may be configured to perform a multiplication computation by multiplying each of bias values applied to the neural network by the initial scale value, and outputting the output feature map by determining the output feature map based on a result of the multiplication computation.

For the outputting of the output feature map, the one or more processors may be configured to output the output feature map by performing the batch normalization on a result of the convolution computation and applying an activation function to a result of the batch normalization.

The device may be a neuromorphic device further comprising an on-chip memory comprising a crossbar array circuit including synapse circuits, and the one or more processors may be configured to store the binary weight values in the synapse circuits, provide the temporal domain binary vectors as input values of the crossbar array circuit, and for the outputting of the output feature map, perform the convolution computation using the crossbar array circuit.

In another general aspect, a processor-implemented method of implementing a neural network in a neuromorphic device includes: storing binary weight values of a neural network in synapse circuits included in a crossbar array circuit in the neuromorphic device; obtaining an input feature map from a memory in the neuromorphic device; converting the input feature map into temporal domain binary vectors; providing the temporal domain binary vectors as input values to the crossbar array circuit; and outputting an output feature map by performing, using the crossbar array circuit, a convolution computation between the binary weight values and the temporal domain binary vectors.

A non-transitory computer-readable storage medium may store instructions that, when executed by one or more processors, configure the one or more processors to perform the method.

In another general aspect, a processor-implemented method of implementing a neural network in a neural network device includes: obtaining binary weight values of a neural network and an input feature map from a memory; converting the input feature map into temporal domain binary vectors; and outputting an output feature map by performing a convolution computation between the binary weight values and the temporal domain binary vectors.

The method may include: storing the binary weight values in synapse circuits included in a crossbar array circuit in the neural network device, wherein the device is a neuromorphic device; providing the temporal domain binary vectors as input values to the crossbar array circuit; and performing the convolution computation using the crossbar array circuit.

A non-transitory computer-readable storage medium may store instructions that, when executed by one or more processors, configure the one or more processors to perform the method.

In another general aspect, a neural network-implementing neuromorphic device includes: a resistive crossbar memory array (RCA) including synapse circuits; and one or more processors configured to store weight values of a neural network in the synapse circuits, convert an input feature map into temporal domain binary vectors, and generate an output feature map by performing, using the RCA, a convolution between the weight values and the temporal domain binary vectors.

For the converting of the input feature map, the one or more processors may be configured to generate one of the temporal domain binary vectors by converting an input activation of the input feature map into elements of either a maximum or a minimum binary value.

A temporal sequence of the maximum binary values and the minimum binary values of the generated temporal domain binary vector may be determined based on a quantization level of the input activation.

For the storing of the weight values, the one or more processors may be configured to: convert initial weight values into binary weight values; generate the weight values by multiplying the binary weight values by an average value of absolute values of the initial weight values; and store the weight values in the synapse circuits.

The initial weight values may be of connections between nodes of a previous layer of the neural network and a node of a current layer of the neural network.

The device may be any one of a personal computer (PC), a server device, a mobile device, and a smart device, the input feature map may correspond to either one of input image data and input audio data, and the one or more processors may be configured to perform any one of image recognition, image classification, and voice recognition based on the generated output feature map.

In another general aspect, a processor-implemented method of implementing a neural network in a neuromorphic device includes: storing weight values of a neural network in synapse circuits of a resistive crossbar memory array

(RCA); converting an input feature map into temporal domain binary vectors; and generating an output feature map by performing, using the crossbar array circuit, a convolution between the binary weight values and the temporal domain binary vectors.

Other features and aspects will be apparent from the following detailed description, the drawings, and the claims.

BRIEF DESCRIPTION OF THE DRAWINGS

FIG. 1 illustrates a neural network node model according to one or more embodiments.

FIGS. 2A to 2B illustrate an operating method of a neuromorphic device according to one or more embodiments.

FIGS. 3A to 3B illustrate a relationship between a vector-matrix multiplication and a computation performed in a crossbar array according to one or more embodiments.

FIG. 4 illustrates performing a convolution computation in a neuromorphic device according to one or more embodiments.

FIG. 5 illustrates a computation performed in a neural network according to one or more embodiments.

FIGS. 6A to 6C illustrate converting initial weight values into binary weight values according to one or more embodiments.

FIGS. 7A and 7B illustrate converting an input feature map into temporal domain binary vectors according to one or more embodiments.

FIG. 8 illustrates application of binary weight values and temporal domain binary vectors to a batch normalization process according to one or more embodiments.

FIG. 9 illustrates a neural network device using a von Neumann structure according to one or more embodiments.

FIG. 10 illustrates a neural network device using an in-memory structure according to one or more embodiments.

FIG. 11 illustrates a method of implementing a neural network in a neural network device according to one or more embodiments.

FIG. 12 illustrates a method of implementing a neural network in a neuromorphic device according to one or more embodiments.

FIG. 13 illustrates a neural network device according to one or more embodiments.

FIG. 14 illustrates a neuromorphic device according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art, after an understanding of the disclosure of this application, may be omitted for increased clarity and conciseness.

Reference will now be made in detail to embodiments, examples of which are illustrated in the accompanying drawings, wherein like reference numerals refer to like elements throughout. In this regard, the one or more embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Unless otherwise defined, all terms, including technical and scientific terms, used herein have the same meaning as commonly understood by one of ordinary skill in the art to which this disclosure pertains and after an understanding of the disclosure of this application. Terms, such as those defined in commonly used dictionaries, are to be interpreted as having a meaning that is consistent with their meaning in the context of the relevant art and the disclosure of this application, and are not to be interpreted in an idealized or overly formal sense unless expressly so defined herein.

Appearances of the phrases 'in some embodiments,' 'in certain embodiments,' in various embodiments,' and similar language throughout this specification may, but do not necessarily, all refer to the same embodiment, but mean 'one or more but not all embodiments' unless expressly specified otherwise.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof. The term used in the embodiments such as "unit", etc., indicates a unit for processing at least one function or operation, and where the unit is hardware or a combination of hardware and software. The use of the term "may" herein with respect to an example or embodiment (for example, as to what an example or embodiment may include or implement) means that at least one example or embodiment exists where such a feature is included or implemented, while all examples are not limited thereto.

Although terms of "first" or "second" are used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Furthermore, the connecting lines, or connectors shown in the various figures presented are intended to represent functional relationships and/or physical or logical couplings between the various elements. It should be noted that many alternative or additional functional relationships, physical connections or logical connections may be present in one or more embodiments.

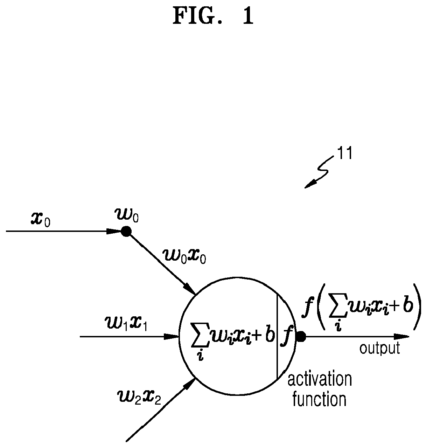

FIG. 1 illustrates a neural network node model according to one or more embodiments.

The neural network node model 11 may include, as an example of neuromorphic computations, a multiplication computation that multiplies information from a plurality of neurons or nodes by a synaptic weight, an addition computation $\Sigma$ for values $\omega 0 x 0$, $\omega 1 x 1$, $\omega 2 x 2$ obtained by multiplying the synaptic weight, and a computation for applying a characteristic function b and an activation function f to a result of the addition computation. A neuromorphic computation result may be provided by a neuromorphic computation. Here, values like x0, x1, x2, and so on correspond to axon values, and values like $\omega 0$, $\omega 1$, $\omega 2$, and so on correspond to synapticweights. While the nodes, values, and weights of the neural network node model 11 may be respectively referred to as "neurons," "axon values," and "synaptic weights," such reference is not intended to impart any relatedness with respect to how the neural network architecture computationally maps or thereby intuitively recognizes information and how a human's neurons operate. I.e., the terms are merely terms of art referring to the hardware implemented nodes, values, and weights of the neural network node model 11.

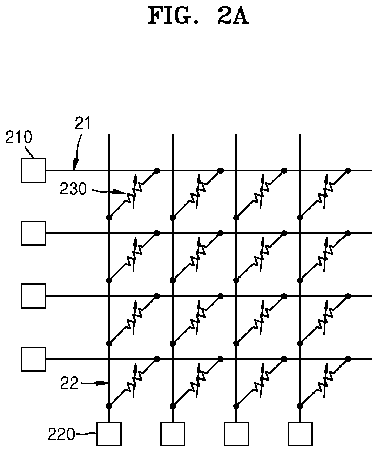

FIGS. 2A to 2B illustrate a method of operating a neuromorphic device according to one or more embodiments.

Referring to FIG. 2A, a neuromorphic device may include a crossbar array circuit . The crossbar array circuit unit may include a plurality of crossbar circuits, and the crossbar array circuit may be implemented as a resistive crossbar memory array (RCA). In detail, the crossbar array circuit may include one or more input nodes 210 (e.g., an axon circuit) each corresponding to a pre-synaptic neuron, one or more neuron circuits 220 each corresponding to a post-synaptic neuron, and one or more synapse circuits 230 that each provide a connection between an input node 210 and a neuron circuit 220. While the circuits may be referred to as "axon circuits," "neuron circuits," and/or "synapse arrays," such terms are merely terms of art referring to the hardware-implemented crossbar array.

In an embodiment, the crossbar array circuit of the neuromorphic device may include four input nodes 210, four neuron circuits 220, and sixteen synapse circuits 230, but the numbers may vary and is not limited thereto. When the number of input nodes 210 is N (here, N is a natural number equal to or greater than 2) and the number of neuron circuits 220 is M (here, M is a natural number equal to or greater than 2 and may or may not be the same as N), N*M synapse circuits 230 may be arranged in a matrix shape.

In detail, a line 21 may be connected to the input node 210 and extend in a first direction (e.g., a latitudinal or row direction), and a line 22 may be connected to the neuron circuit 220 and extend in a second direction crossing the first direction (e.g., a longitudinal or column direction). Hereinafter, for convenience of explanation, the line 21 extending in the first direction may be referred to as a row line, and the line 22 extending in the second direction may be referred to as a column line. A plurality of synapse circuits 230 may be arranged at respective intersections of the row line 21 and the column line 22, thereby connecting corresponding row lines 21 and corresponding column lines 22.

The input node 210 may generate a signal (e.g., a signal corresponding to particular data) and transmit the signal to the row line 21, whereas the neuron circuit 220 may receive a synaptic signal, from the synapse circuit 230, through the column line 22 and process the synaptic signal. The input node 210 may correspond to an axon, and the neuron circuit 220 may correspond to a neuron. However, while the input node 210 may correspond to a pre-synaptic neuron and the neuron circuit 220 may correspond to a post-synaptic neuron, in other non-limiting examples the neuron circuit 220 may correspond to a pre-synaptic neuron and/or the input node 210 may correspond to a post-synaptic neuron. For example, when the input node 210 receives a synaptic signal from the neuron circuit 220 (e.g., corresponding to another neuron), the input node 210 may correspond to a post-synaptic neuron. Further, when the neuron circuit 220 transmits a signal to the neuron circuit 220 (e.g., corresponding to another neuron), the neuron circuit 220 may function as a pre-synaptic neuron.

A connection between the input node 210 and the neuron circuit 220 may be established through the synapse circuit 230. Here, the synapse circuit 230 may be a device whose electrical conductance or weight is changed according to an electrical pulse (e.g., a voltage or a current) applied to both ends thereof.

The synapse circuit 230 may include, for example, a variable resistance element. A variable resistance device may be a device that may be switched between different resistance states according to a voltage or a current applied to both ends thereof and may have a single layer structure or a multi-layered structure including various materials that may have a plurality of resistance states, e.g., metal oxides such as transition metal oxides and perovskite-based materials, phase-change materials such as chalcogenide materials, ferroelectric materials, ferromagnetic materials, etc. An operation in which the variable resistance element and/or the synapse circuit 230 is changed from a high resistance state to a low resistance state may be referred to as a set operation, whereas an operation in which the variable resistance element and/or the synapse circuit 230 is changed from a low resistance state to a high resistance state may be referred to as a reset operation.

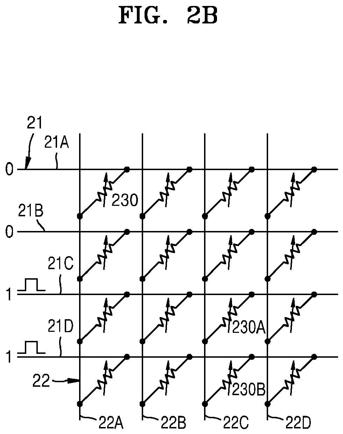

A non-limiting example operation of a neuromorphic device will be described below with reference to FIG. 2B. For convenience of explanation, row lines 21 will be referred to as a first row line 21A, a second row line 21B, a third row line 21C, and a fourth row line 21D in the order from the above, and column lines 22 will be referred to as a first column line 22A, a second column line 22B, a third column line 22C, and a fourth column line 22D in the order from the left.

Referring to FIG. 2B, in an initial state, all of the synapse circuits 230 may be in a state of relatively low conductivity, that is, a high resistance state. However, when some of the synapse circuits 230 are in a low resistance state, an initialization operation for switching them into the high resistance state may be additionally performed. Each of the synapse circuits 230 may have a predetermined threshold value for changing resistance and/or conductivity (e.g., where each of the synapse circuits 230 may change resistance and/or conductivity when at least the predetermined threshold value of voltage or current is applied to the synapse circuit 230). For example, when a voltage or a current having a magnitude smaller than the predetermined threshold value is applied to both ends of one of the synapse circuits 230, the conductivity of the synapse circuit 230 may not be changed (e.g., may be maintained). Alternatively or additionally, for example, when a voltage and/or a current having a magnitude greater than the predetermined threshold value is applied to the synapse circuit 230, the conductivity of the synapse circuit 230 may be changed.

In this state, to perform an operation for outputting particular data as a result of a particular column line 22, an input signal corresponding to the particular data may be input to the row line 21 in response to an output of the input node 210. When the input signal is input to the row line 21, the input signal may applied to the row lines 21 as an electrical pulse. For example, when an input signal corresponding to binary data '0011' is input through the row line 21, the bits of the data may sequentially correspond to the row lines 21 such that no electrical pulse may be applied to row lines 21 corresponding to the '0' bits of the data (e.g.,, first and second row lines 21A and 21B) and electrical pulses may be applied to row lines 21 corresponding to the '1' bits of the data (e.g.,, third and fourth row lines 21C and 21D). When the input signal is input to the row lines 21, the particular column line 22 may be driven with a determined voltage or current for an output of the column line 22.

For example, when a column line 22 to output particular data is predetermined, the predetermined column line 22 may be driven, such that the synapse circuits 230 located at the intersections of the determined column line 22 and the row lines 21 corresponding to '1' receive a voltage having a magnitude equal to or greater than a predetermined minimum voltage with which the synapse circuit 230 may perform a set operation (hereinafter referred to as a set voltage), and remaining column lines 22 may be driven, such that the synapse circuit 230 receives voltages having magnitudes smaller than that of the set voltage. For example, when the magnitude of the set voltage is Vset and a third column line 22C is determined as the column line 22 for outputting the data '0011', the magnitudes of electrical pulses applied to third and fourth row lines 21C and 21D may be equal to or greater than Vset and a voltage applied to the third column line 22C may be 0 V, such that first and second synapse circuits 230A and 230B located at the intersections between the third column line 22C and the third and fourth row lines 21C and 21D receive voltages equal to or greater than Vset. When the first and second synapse circuits 230A and 230B receive the voltages equal to or greater than Vset, the first and second synapse circuits 230A and 230B may be in a low resistance state (e.g., a set operation where the first and second synapse circuits 230A and 230B may be changed from a high resistance state to the low resistance state). The conductivity of the first and second synapse circuits 230A and 230B in the low resistance state may gradually increase as the number of electrical pulses increases. The magnitude and the width of electrical pulses applied thereto may be substantially constant. Voltages applied to remaining column lines (that is, first, second, and fourth column lines 22A, 22B, and 22D) may have a value between 0 V and Vset (e.g., 1/2Vset), such that remaining synapse circuits 230 (e.g., the synapse circuits 230 other than the first and second synapse circuits 230A and 230B) receive a voltage smaller than Vset. When the remaining synapse circuits 230 receive the voltage smaller than Vset, the resistance state of the remaining synapse circuits 230 may not be changed (e.g., may be maintained).

In another example, when no particular column line 22 is predetermined to output particular data, a current flowing through each of the column lines 22 may be measured while applying electrical pulses corresponding to the particular data to the row lines 21, and the column line 22 that first reaches a predetermined threshold current (e.g., a third column line 22C) may be determined as the column line 22 to output the particular data.

By the methods described above with reference to FIGS. 2A to 2B, different data may be output to different column lines 22, respectively.

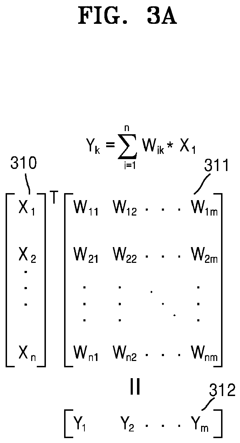

FIGS. 3A to 3B illustrate a relationship between a vector-matrix multiplication and a computation performed in a crossbar array according to one or more embodiments.

First, referring to FIG. 3A, a convolution computation between an input feature map and a weight value may be performed by using a vector-matrix multiplication. For example, pixel data of the input feature map may be expressed as a matrix X 310, and weight values may be expressed as a matrix W 311. Pixel data of an output feature map may be expressed as a matrix Y 312, which is a result of a multiplication computation between the matrix X 310 and the matrix W311.

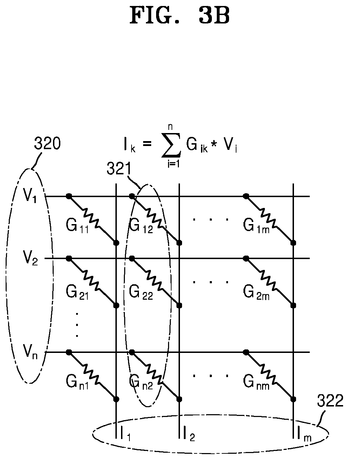

Referring to FIG. 3B, a vector multiplication computation may be performed by using a non-volatile memory device of a crossbar array (e.g., the crossbar array circuit of FIGS. 2A to 2B). As compared to FIG. 3A, pixel data of an input feature map (e.g., the matrix X 310) may be received as an input value of a non-volatile memory device, and the input value may be a voltage 320. Also, weight values (e.g., the matrix W311) may be stored in a synapse of the non-volatile memory device (that is, a memory cell) and the weight values stored in the memory cell may be conductance 321. Therefore, output values (e.g., the matrix Y 312) of the non-volatile memory device may be expressed as a current 322, which is a result of a multiplication computation between the voltage 320 and conductance 321.

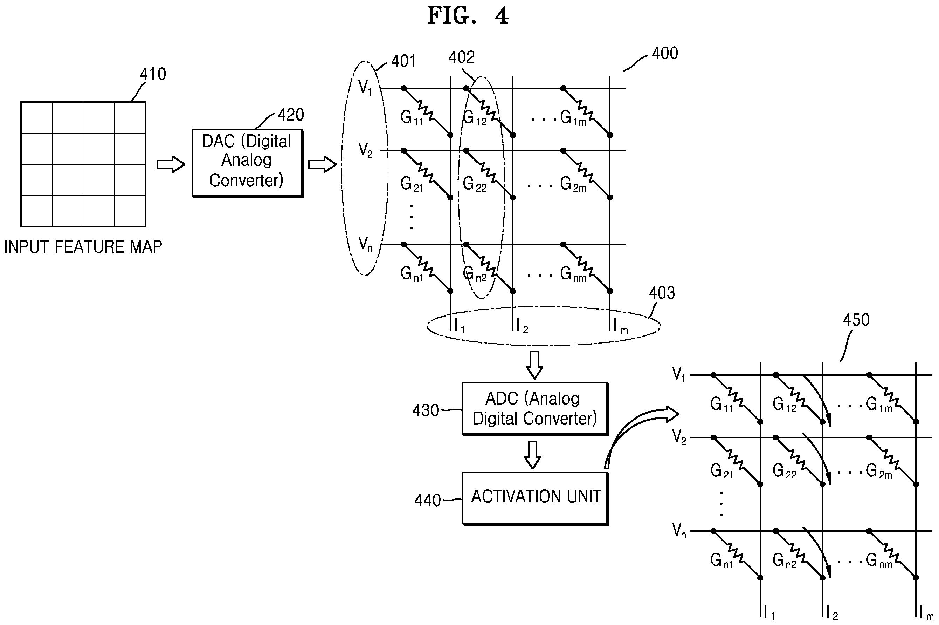

FIG. 4 illustrates performing a convolution computation in a neuromorphic device according to one or more embodiments.

The neuromorphic device may receive pixels of an input feature map 410, and a crossbar array circuit 400 (e.g., the crossbar array circuit of FIGS. 2A to 2B) of the neuromorphic device may be implemented as a resistive crossbar memory array (RCA).

The neuromorphic device may receive an input feature map in the form of a digital signal and convert the input feature map into a voltage in the form of an analog signal by using a digital analog converter (DAC) 420. In an embodiment, the neuromorphic device may convert pixel values of an input feature map into a voltage by using the DAC 420 and provide the voltage as an input value 401 of the crossbar array circuit 400.

Also, learned (e.g., pre-learned) weight values may be stored in the crossbar array circuit 400 of the neuromorphic device. Weight values may be stored in a memory cell of the crossbar array circuit 400, and the weight values stored in the memory cell may be conductance 402. The neuromorphic device may calculate an output value by performing a vector multiplication computation between the input value 401 and the conductance 402, and the output value may be expressed as a current 403. In other words, the neuromorphic device may output the same result as a result of a convolution computation between the input feature map and the weight values by using the crossbar array circuit 400.

Since the current 403 output from the crossbar array circuit 400 is an analog signal, the neuromorphic device may use an analog digital converter (ADC) 430 to convert the current 403 to an output feature map to be used as an input feature map of a subsequent crossbar array circuit (e.g., crossbar array circuit 450). The neuromorphic device may use the ADC 430 to convert the current 403, which is an analog signal, into a digital signal. In an embodiment, the neuromorphic device may convert the current 403 into a digital signal having the same number of bits as the pixels of the input feature map 410 by using the ADC 430. For example, when the pixels of the input feature map 410 are 4-bit data, the neuromorphic device may convert the current 403 into 4-bit data by using the ADC 430.

The neuromorphic device may apply an activation function to a digital signal converted by the ADC 430 by using an activation unit 440. A Sigmoid function, a Tanh function, and a Rectified Linear Unit (ReLU) function may be used as the activation function, but activation functions applicable to the digital signal are not limited thereto.

The digital signal to which the activation function is applied may be used as an input feature map of the subsequent crossbar array circuit 450. When the digital signal to which the activation function is applied is used as an input feature map of another crossbar array circuit 450, the above-described process may be applied to the other crossbar array circuit 450 in the same manner.

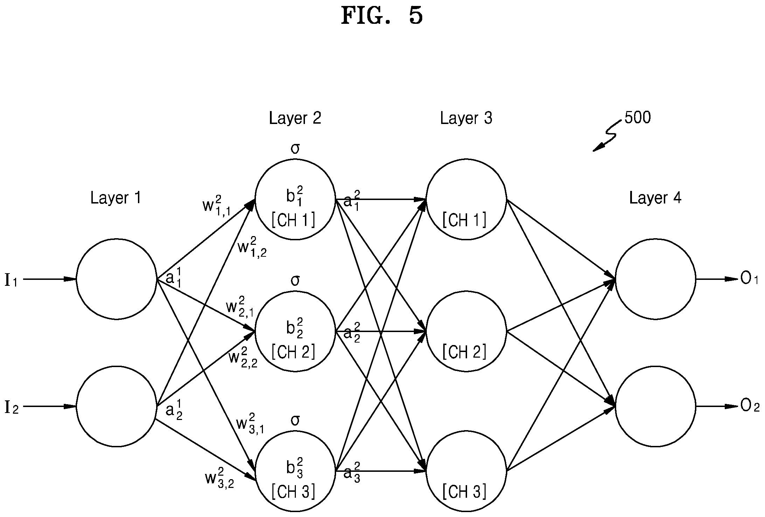

FIG. 5 illustrates a computation performed in a neural network according to one or more embodiments.

Referring to FIG. 5, a neural network 500 may have a structure including an input layer, hidden layers, and an output layer, and may perform a computation based on received input data (e.g., $I_1$ and $I_2$), and generate output data (e.g., $O_1$ and $O_2$) based on a result of performing the computation.

For example, as shown in FIG. 5, the neural network 500 may include an input layer (Layer 1), two hidden layers (Layer 2 and Layer 3), and an output layer (Layer 4). Since the neural network 500 includes many layers that may process valid information, the neural network 500 may process more complex data sets than a neural network having a single layer. Further, although FIG. 5 shows that the neural network 500 includes four layers, it is merely an example, and the neural network 500 may include fewer or more layers or may include fewer or more nodes or channels of respective plural nodes. In other words, the neural network 500 may include layers of various structures different from that shown in FIG. 5.

Returning to FIG. 5, each of layers included in the neural network 500 may include a plurality of channels, where each of the channels may include or represent a plurality of artificial nodes known as neurons, processing elements (PE), or similar terms, configured to process data of the corresponding channel. While the nodes may be referred to as "artificial nodes" or "neurons," such reference is not intended to impart any relatedness with respect to how the neural network architecture computationally maps or thereby intuitively recognizes information and how a human's neurons operate. I.e., the terms "artificial nodes" or "neurons" are merely terms of art referring to the hardware implemented nodes of the neural network 500. As shown in FIG. 5, the Layer 1 may include two channels (nodes), and the Layer 2 and the Layer 3 may each include three channels (nodes). However, it is merely an example, and the layers included in the neural network 500 may each include various numbers of channels (nodes).

Channels included in each of the layers of the neural network 500 may be connected to each other and process data. For example, one channel may receive data from other channels and perform a computation and output a result of the computation to other channels.

An output value of a channel may be referred to as an activation, or a value which results from such a predetermined activation function of the corresponding channel. An input and an output of one or more channels (e.g., a layer) may be referred to as an input feature map and an output feature map. An input feature map may include a plurality of input activations, and an output feature map may include a plurality of output activations. In other words, a feature map including activations may be an output of the one or more channels (e.g., the layer) and the activations may be each be a parameter corresponding to an input of channels included in a next layer, due to corresponding connection(s) with the next layer.

Meanwhile, each channel may determine its own activation based on resultant activations and weight values received from channels included in a previous layer. A weight value may be a parameter used to calculate an output activation in each channel and may be a value assigned to a connection relationship between channels. For example, an output from a previous layer's channel may be provided to as an input to a channel of a next or subsequent layer through a weighted connection between the previous layer's channel and the channel of the next layer, with the weight of the weighted connection being variously adjusted during the training of the neural network until the neural network is trained for a desired objective. There may be additional connections to the channel of the next layer, such as for providing a bias connection value through a connection that may or may not be weighted and/or for providing the above example recurrent connection which may be weighted. During training and implementation such connections and connection weights may be selectively implemented, removed, and varied to generate or obtain a resultant neural network that is thereby trained and that may be correspondingly implemented for the trained objective, such as for any of the above example recognition objectives.

Accordingly, each channel, or representative nodes of such a channel, may be processed by a computational or processing element (e.g., a PE) that receives an input (e.g., through, or by further considering, such weighted connections) and outputs an output activation, and an input and an output of each channel may be mapped. The computational unit may be configured to perform the activation function for a node. As a non-limiting example, when $\underline{\delta}$ is an activation function, $w_{j,k}^{i}$ is a weight value from a k-th channel included in an (i-1)-th layer to a j-th channel included in an i-th layer, $b_{j}^{i}$ is a bias the j-th channel included in the i-th layer, and $a_{j}^{i}$ is an activation of the j-th channel included in the i-th layer, the activation $a_{j}^{i}$ may be calculated by using Equation 1 below.

Equation 1:

$$a_j^i = \sigma \left( \sum_k (w_{j,k}^i \times a_k^{i-1}) + b_j^i \right)$$

As shown in FIG. 5, an activation of a first channel CH 1 of the Layer 2 may be expressed as $a_1^2$. Also, $a_1^2$ may have a value $a_1^2 = \sigma\left(w_{1,1}^2 \times a_1^1 + w_{1,2}^2 \times a_2^1 + b_1^2\right)$ according to Equation 1. However, Equation 1 described above is merely an example for describing an activation and weight values used to process data in the neural network 500, and the present disclosure is not limited thereto. The activation may be a value obtained by applying a batch normalization and an activation function to a sum of activations received from a previous layer.

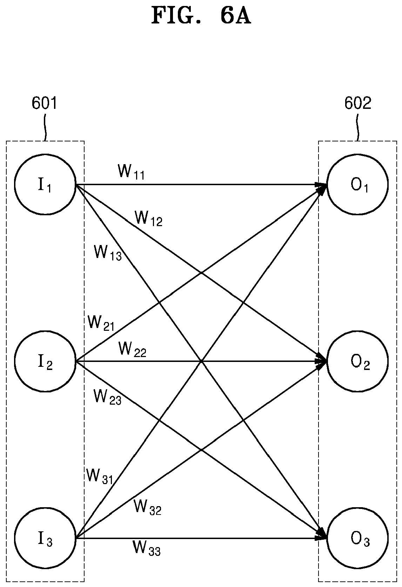

FIGS. 6A to 6C illustrate converting initial weight values into binary weight values according to one or more embodiments.

Referring to FIG. 6A, an input layer 601, an output layer 602, and initial weight values $W_{11}$, $W_{12}$, $W_{13}$, $W_{21}$, $W_{22}$, $W_{23}$, $W_{31}$, $W_{32}$, and $W_{33}$ are shown. Three input activations $I_1$, $I_2$, and $I_3$ may respectively correspond to three neurons of the input layer 601, and three output activations $O_1$, $O_2$, and $O_3$ may respectively correspond to three neurons of the output layer 602. Also, an initial weight value $W_{nm}$ may be applied to an n-th input activation $I_n$ and an m-th output activation $O_m$. In an example, the output layer 602 is a next hidden layer and not a final output layer of the neural network.

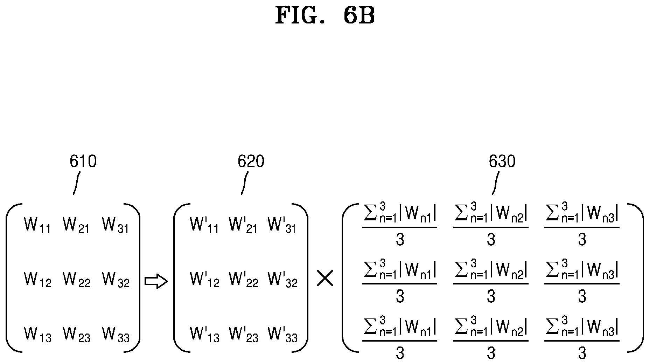

Initial weight values 610 of FIG. 6B represent the initial weight values $W_{11}$, $W_{12}$, $W_{13}$, $W_{21}$, $W_{22}$, $W_{23}$, $W_{31}$, $W_{32}$, and $W_{33}$ shown in FIG. 6A in the form of a matrix.

The initial weight values 610 may be determined during a training process of a neural network. In an embodiment, the initial weight values 610 may be expressed as 32-bit floating point numbers.

The initial weight values 610 may be converted into binary weight values 620. The binary weight values 620 may each have a size of 1 bit. In one or more embodiments, a model size and an operation count may be reduced by using the binary weight values 620 instead of the initial weight values 610 during an inference process of a neural network. For example, when 32-bit initial weight values 610 are converted to 1-bit binary weight values 620, the model size may be compressed to 1/32.

In an embodiment, based on the maximum value and the minimum value of the initial weight values 610, the initial weight values 610 may be converted into the binary weight values 620. In an embodiment, based on the maximum value and the minimum value of initial weight values that may be input to a neural network, the initial weight values 610 may be converted into the binary weight values 620.

For example, when the maximum value of initial weight values that may be input to a neural network is 1.00 and the minimum value is -1.00, an initial weight value that is 0.00 or greater may be converted into a binary weight value 1 and an initial weight value that is less than 0.00 may be converted into a binary weight value -1. That is, for example, initial weight values greater than 0.00 may be converted to a binary value of the maximum value and initial weight values less than 0.00 may be converted to a binary value of the minimum value. Further, in an example, initial weight values equal to 0.00 may be converted to a binary weight value 0.

Also, the binary weight values 620 may be multiplied by an average value 630 of the absolute values of the initial weight values 610. Since the binary weight values 620 are multiplied by the average value 630 of the absolute values of the initial weight values 610, even when the binary the average value 630 is used for operations (e.g., convolutional operations) of the neural network, a result similar to that of the case in which the initial weight values 610 are used for operations of the neural network may be obtained.

For example, when a previous layer (e.g., the input layer 601) of the neural network includes 1024 neurons and a current layer (e.g., the output layer 602) of the neural network includes 512 neurons, 1024 initial weight values 610 may be used to calculate the activations of the 512 neurons belonging to the current layer. Here, when an average value of the absolute values of the 1024 initial weight value 610, which are 32-bit floating point numbers, is calculated for each neuron, the binary weight values 620 may be multiplied by a result of the calculation.

In detail, binary weight values 620 (of the initial weight values 610 used to calculate predetermined output activations $O_1$, $O_2$, and $O_3$) may be multiplied by the average value 630 (of the absolute values of the initial weight values 610.

For example, referring to FIG. 6A, initial weight values $W_{11}$, $W_{21}$, and $W_{31}$ may be used during the process of calculating a first output activation $O_1$. During the process, the initial weight values $W_{11}$, $W_{21}$, and $W_{31}$ may be respectively converted to binary weight values $W_{11}'$, $W_{21}'$, and $W_{31}'$, and the binary weight values $W_{11}'$, $W_{21}'$, and $W_{31}'$ may each be multiplied by an average value $\dfrac{\sum_{n=1}^{3} |W_{n1}|}{3}$ of the absolute values of the initial weight values $W_{11}$, $W_{21}$, and $W_{31}$.

In the same regard, binary weight values $W_{12}'$, $W_{22}'$, and $W_{32}'$ may each be multiplied by an average value $\dfrac{\sum_{n=1}^{3} |W_{n2}|}{3}$ of the absolute values of initial weight values $W_{12}$, $W_{22}$, and $W_{32}$. Also, binary weight values $W_{13}'$, $W_23'$, and $W_33'$ may each be multiplied by an average value $\dfrac{\sum_{n=1}^{3} |W_{n3}|}{3}$ of the absolute values of initial weight values $W_{13}$, $W_{23}$, and $W_{33}$.

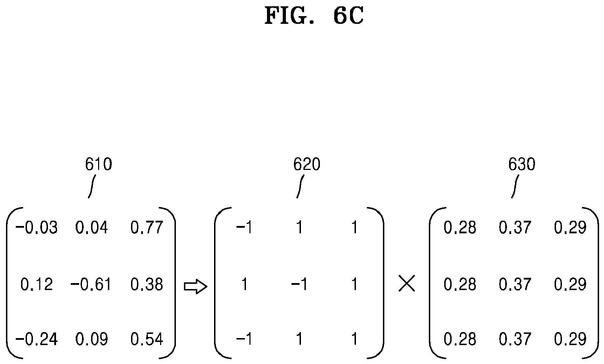

Referring to FIG. 6C, the initial weight values 610, the binary weight values 620, and the average value 630 of the absolute values of the initial weight values 610 are shown as specific values, as a non-limiting example. In the example of FIG. 6C, the initial weight values 610 are expressed in decimal for convenience of explanation, but in other examples the initial weight values 610 may be 32-bit floating point numbers.

FIG. 6C shows that an initial weight value 610 equal to or greater than 0.00 is converted to a binary weight value 620 of 1 and an initial weight value 610 less than 0.00 is converted to a binary weight value 620 of -1.

Also, FIG. 6C shows that the average value of the absolute values of the initial weight values $W_{11}$, $W_{21}$, and $W_{31}$ is '0.28', the average value of the absolute values of the initial weight values $W_{12}$, $W_{22}$, and $W_{32}$ is '0.37', and the average value of the absolute values of the initial weight values $W_{13}$, $W_{23}$, and $W_{33}$ is '0.29'.

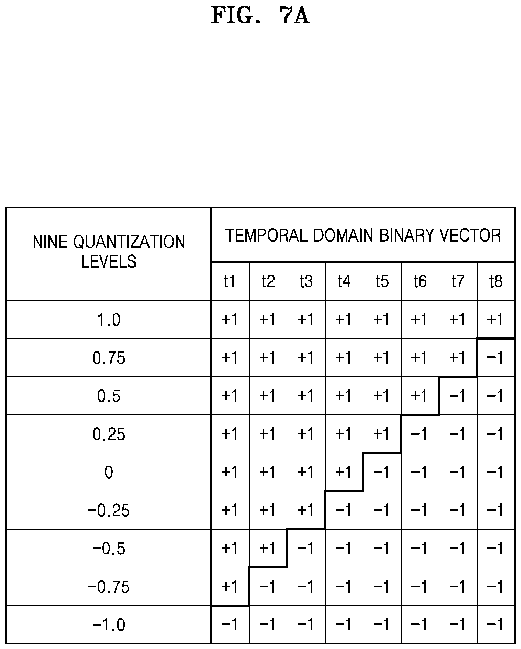

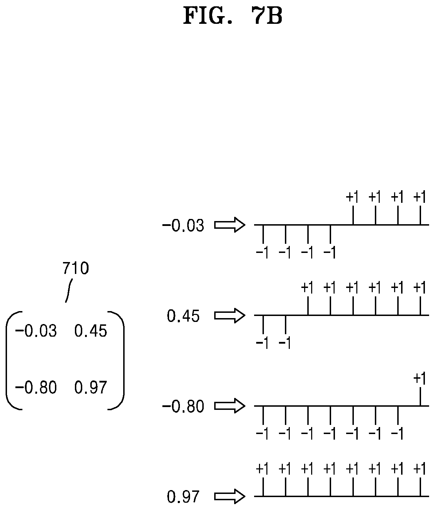

FIGS. 7A and 7B illustrate converting an input feature map into temporal domain binary vectors according to one or more embodiments.

An input feature map may be converted into a plurality of temporal domain binary vectors. An input feature map may include a plurality of input activations, and each of the multiple input activations may be converted into a temporal domain binary vector.

An input feature map may be converted into a plurality of temporal domain binary vectors based on a quantization level. In an embodiment, a range between the maximum value and the minimum value of input activations that may be input to a neural network may be divided into N quantization levels (N is a natural number). For example, a sigmoid function or a tanh function may be used to classify quantization levels, but the present disclosure is not limited thereto.

For example, referring to FIG. 7A, when there are nine quantization levels and the maximum value and the minimum value of input activations that may be input to the neural network are 1.0 and -1.0, respectively, the quantization levels may be '1.0, 0.75, 0.5, 0.25, 0, -0.25, -0.5, -0.75, and -1.0'.

Meanwhile, although FIG. 7A shows that the intervals between quantization levels are set to be the same, the intervals between quantization levels may be set to be in a non-linear fashion.

When N quantization levels are set, a temporal domain binary vector may, or may be set to, have N-1 elements. For example, referring to FIG. 7A, when nine quantization levels are set, the temporal domain binary vector may have eight elements $t_1$, $t_2$, $t_3$, $t_4$, $t_5$, $t_6$, $t_7$, and $t_8$.

Based on a quantization level to which an input activation belongs to from among the N quantization levels, the input activation may be converted into a temporal domain binary vector. For example, when a predetermined input activation has a value equal to or greater than 0.75, the predetermined input activation may be converted into a temporal domain binary vector '+1, +1, +1, +1, +1, +1, +1, +1', corresponding to the 1.0 quantization level. Also, in another example, when a predetermined input activation has a value less than -0.25 and equal to or greater than -0.5, the predetermined input activation may be converted into a temporal domain binary vector '+1, +1, +1, -1, -1, -1, -1, -1', corresponding to the -0.25 quantization level.

Referring to FIG. 7B, an example in which each of a plurality of input activations included in an input feature map 710 is converted into a time binary vector is shown. When a first activation ('-0.03') has a value less than 0 and equal to or greater than -0.25, the first activation may be converted into a temporal domain binary vector '-1, -1, -1, -1, +1, +1, +1, +1'. Meanwhile, when a second activation has a value less than 0.5 and equal to or greater than 0.25, the second activation may be converted into a temporal domain binary vector '-1, -1, +1, +1, +1, +1, +1, +1'. Also, when a third activation ('-0.80') has a value less than -0.75 and equal to or greater than -1.0, the third activation may be converted into a temporal domain binary vector '-1, -1, -1, -1, -1, -1, -1, +1'. Meanwhile, when a fourth activation ('0.97') has a value equal to or greater than 0.75, the fourth activation may be converted into a temporal domain binary vector '+1, +1, +1, +1, +1, +1, +1, +1'.

Meanwhile, when each of input activations of each layer of a neural network is converted to a binary value in a typical operation that does not use temporal domain binary vector, information carried by the input activation is lost, and thus information may not be accurately transmitted between layers.

In contrast, as in one or more embodiments, each of input activations of each layer of a neural network may be converted into a temporal domain binary vector, and therefore original input activations may be more accurately approximated based on a plurality of binary values.

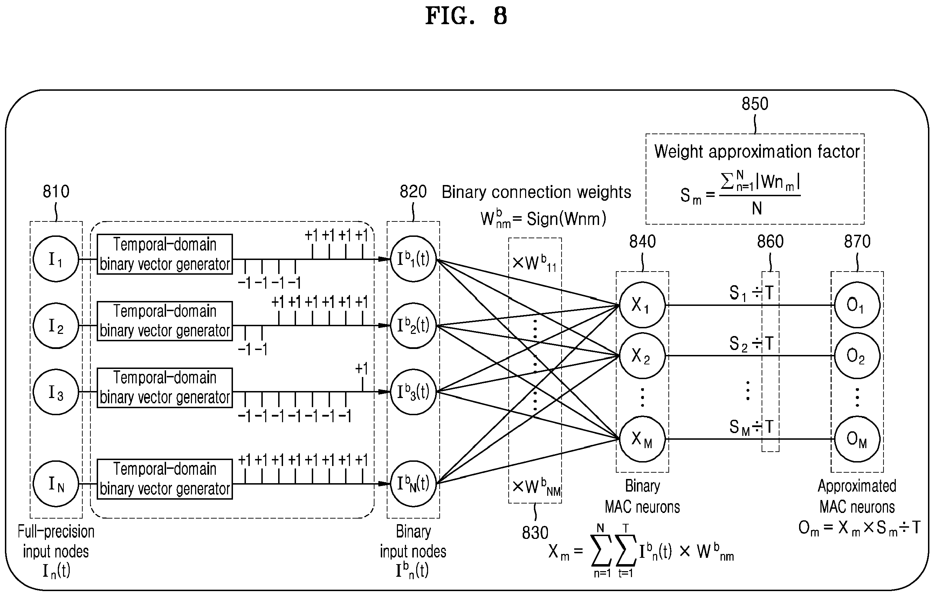

FIG. 8 illustrates application of binary weight values and temporal domain binary vectors to a batch normalization process according to one or more embodiments.

In a typical neural network model, for each neuron of a current layer, a multiply and accumulate (MAC) computation of multiplying input activations (e.g., initial input values or output values from a previous layer) by initial weight values (e.g., 32-bit floating point numbers) and summing results of the multiplications may be performed, a bias value for the neuron may be added to a result of the MAC computation, a batch normalization for the neuron may be performed on a result of adding the bias value, a result of the batch normalization may be input into an activation function, and an output value of the activation function may be transferred as an input value to a next layer.

The above-stated process may be expressed as Equation 2 below, for example. In Equation 2, $I_n$ denotes an input activation, $W_{nm}$ denotes an initial weight value, $B_m$ denotes a bias value, $\alpha_m$ denotes an initial scale value of batch normalization, $\beta_m$ denotes a bias value of batch normalization, f denotes an activation function, and $O_m$ denotes an

output activation.

Equation 2：

$$O_m = f\left(\left(\left(\sum_{n=1}^{N} I_n \times W_{nm}\right) + B_m\right) \times \alpha_m + \beta_m\right)$$

$$= f\left(\left(\sum_{n=1}^{N} I_n \times W_{nm}\right) \times \alpha_m + (B_m \times \alpha_m + \beta_m)\right)$$

Referring to FIG. 8, an input activation $I_n$ 810 may be converted into a temporal domain binary vector $I^b_n(t)$ 820. A temporal domain binary vector generator may convert the input activation $I_n$ 810 into the temporal domain binary vector $I^b_n(t)$ 820.

As described above with reference to FIGS. 7A to 7B, the input activation $I_n$ 810 may be converted into the temporal domain binary vector $I^b_n(t)$ 820 according to preset quantization levels. Meanwhile, the number of elements included in each temporal domain binary vectors $I^b_n(t)$ 820 may be determined according to the number of quantization levels. For example, when the number of quantization levels is N, the number of elements included in each temporal domain binary vector $I^b_n(t)$ 820 may be N-1.

On the other hand, when the input activation $I_n$ 810 is converted to the temporal domain binary vector $I^b_n(t)$ 820, a result of a computation using the temporal domain binary vector $I^b_n(t)$ 820 (e.g., an intermediate activation) may be amplified by the number (e.g., a total number) T 860 of elements included in the temporal domain binary vector $I^b_n(t)$ 820. Therefore, to reduce such amplification in the case of using the temporal domain binary vector $I^b_n(t)$ 820, a result of the computation may be divided by the number T 860 of the elements to obtain the same result as a result of the original MAC computation. Further detailed description thereof will be given by using Equation 5 and Equation 6 below, for example.

As described above with reference to FIGS. 6A to 6C, an initial weight value $W_{nm}$ may be converted to a binary weight value $W^b_{nm}$ 830. For example, the initial weight value $W_{nm}$ may be converted to the binary weight value $W^b_{nm}$ 830 using a sign function.

A convolution computation between the temporal domain binary vector $I^b_n(t)$ 820 and the binary weight value $W^b_{nm}$ 830 may be performed. In an embodiment, an XNOR computation and an adding computation between the temporal domain binary vector $I^b_n(t)$ 820 and the binary weight value $W^b_{nm}$ 830 may be performed.

A result of performing the XNOR computation between the temporal domain binary vector $I^b_n(t)$ 820 and the binary weight value $W^b_{nm}$ 830 and summing results thereof may have the same increase/decrease pattern as that of a result of performing a convolution computation between the original multi-bit input activation $I_n$ 810 and the binary initial weight value $W_{nm}$.

The convolution computation between the temporal domain binary vector $I^b_n(t)$ 820 and the binary weight value $W^b_{nm}$ 830 may be expressed as Equation 3 below, for example.

Equation 3：

$$\sum_{n=1}^{N}\sum_{t=1}^{T} I^b_n(t) \times W^b_{nm} \cong \sum_{n=1}^{N} I_n W^b_{nm}$$

As a result of the convolution computation, an intermediate activation $X_m$ 840 may be obtained. The intermediate activation $X_m$ 840 may be expressed as Equation 4 below, for example.

Equation 4：

$$X_m = \sum_{n=1}^{N}\sum_{t=1}^{T} I^b_n(t) \times W^b_{nm}$$

The intermediate activation $X_m$ 840 may be multiplied by an average value $S_m$ 850 of the absolute values of

$$S_m = \frac{\sum_{n=1}^{N} |W_{nm}|}{N}$$

initial weight values (e.g., wherein                                    ).

Also, the intermediate activation $X_m$ 840 may be divided by the number T 860 of elements included in each of the temporal domain binary vectors $I^b_n(t)$ 820. The number T 860 of elements included in each temporal domain binary vectors $I^b_n(t)$ 820 may be determined according to the number of quantization levels. Since a result of a computation using the temporal domain binary vector $I^b_n(t)$ 820 is amplified by the number T 860 of elements, the intermediate activation $X_m$ 840 may be divided by the number T 860 of elements to reduce such amplification, thereby obtaining the same result as that of an original MAC computation.

When the intermediate activation $X_m$ 840 is multiplied by the average value $S_m$ 850 of the absolute values of the initial weight values and is divided by the number T 860 of elements include in each of the temporal domain binary vectors $I^b_n(t)$ 820, an output activation $O_m$ 870 may be obtained. The output activation $O_m$ 870 may be expressed as Equation 5 below, for example.

Equation 5:

$$O_m = X_m \times S_m \div T$$

In an embodiment, when batch normalization is performed, as the initial scale value of the batch normalization is multiplied by the average value $S_m$ 850 of the absolute values of the initial weight values and is divided by the number T 860 of elements included in each of the temporal domain binary vector $I^b_n(t)$ 820, a modified scale value $\alpha''_m$ may be obtained.

When the binary weight value $W^b_{nm}$, the temporal domain binary vector $I^b_n(t)$, and the correction scale value $\alpha''_m$ are applied to a neural network model according to Equation 2, Equation 2 may be expressed as Equation 6 below, for example.

Equation 6:

$$O_m = f\left(\left(\left(\sum_{n=1}^{N}\sum_{t=1}^{T} I^b_{nt} \times W^b_{nm}\right) \times M_m \times \frac{1}{T} + B_m\right) \times \alpha_m + \beta_m\right)$$

$$= f\left(\left(\sum_{n=1}^{N}\sum_{t=1}^{T} I^b_{nt} \times W^b_{nm}\right) \times M_m \times \frac{1}{T} \times \alpha_m + (B_m \times \alpha_m + \beta_m)\right)$$

$$= f\left(\left(\sum_{n=1}^{N}\sum_{t=1}^{T} I^b_{nt} \times W^b_{nm}\right) \times \alpha''_m + (B_m \times \alpha_m + \beta_m)\right)$$

$$(W^b_{nm} = \{-1 \ or + 1\}, I^b_{nt} = \{-1 \ or + 1\}, \alpha''_m = M_m \times \frac{1}{T} \times \alpha_m)$$

In one or more embodiments, by converting the initial weight value $W_{nm}$, which is expressed as a multi-bit floating point number, to a binary weight value $W^b_{nm}$ 830 having a value +1 or -1, a neural network model size and an operation count may be advantageously reduced, thereby reducing a memory used, and an operation count performed, by a neuromorphic and/or neural network device of one or more embodiments implementing the neural network.

In one or more embodiments, by multiplying the binary weight value $W^b_{nm}$ 830 by the average value $S_m$ 850 of the absolute values of the initial weight values, a result similar to that of the case of using the initial weight value $W_{nm}$ may be obtained even when the binary weight value $W^b_{nm}$ 830 is used.

On the other hand, when the average value $S_m$ 850 of the absolute values of the initial weight values is included in a batch normalization computation as shown in Equation 6 ($M_m \times \alpha_m$), no additional model parameter may be generated, and thus there is no loss in model size reduction and operation count reduction. In other words, as compared with Equation 2, it may be seen that, in Equation 6, a computation may be performed without additional parameters and separate procedures, thereby maintaining the low memory used, and the low operation count performed, by the neuromorphic and/or neural network device of one or more embodiments implementing the neural network.

In the present disclosure, the multi-bit input activation $I_n$ 810 may be quantized to a low bit numbers like 2 bits to 3 bits, and a result thereof may be converted into the temporal domain binary vector $I^b_n(t)$ 820 having a plurality of elements. Also, in the present disclosure, by performing a time axis XNOR computation between the binary weight value $W^b_{nm}$ 830 and the temporal domain binary vector $I^b_n(t)$ 820, a learning (or training) performance and final classification/recognition accuracy at levels similar to those of a MAC computation-based 32-bit floating point neural network may be achieved.

On the other hand, when the number T 860 of elements is included in a batch normalization computation as shown in Equation 6 ($\alpha_m$ X 1/T), no additional model parameter may be generated, and thus there is no loss in model size reduction and operation count reduction. In other words, as compared with Equation 2, it may be seen that, in Equation 6, a computation may be performed without additional parameters and separate procedures, thereby maintaining the low memory used, and the low operation count performed, by the neuromorphic and/or neural network device of one or more embodiments implementing the neural network.

For example, when the 32-bit input activation $I_n$ 810 is converted to the temporal domain binary vector $I^b_n(t)$ 820 having T elements, the neural network model size may be compressed to T/32, thereby reducing a memory used, and an operation count performed, by the neuromorphic and/or neural network device of one or more embodiments implementing the neural network.

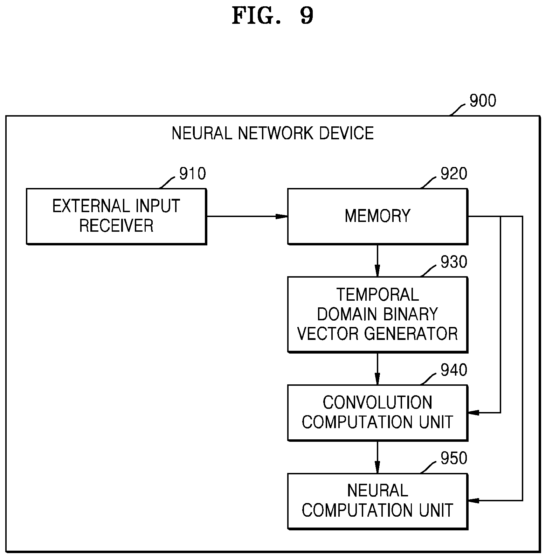

FIG. 9 illustrates a neural network device using a von Neumann structure according to one or more embodiments.

Referring to 9, a neural network device 900 may include an external input receiver 910, a memory 920 (e.g., one or more memories), a temporal domain binary vector generator 930, a convolution computation unit 940, and a neural computation unit 950.

In the neural network device 900 shown in FIG. 9, components related to the present disclosure are shown. Therefore, it will be apparent after an understanding of the present disclosure that the neural network device 900 may further include other general-purpose components in addition to the components shown in FIG. 9.

The external input receiver 910 may receive neural network model related information, input image (or audio) data, etc. from outside the neural network device 900. Various types of information and data received by the external input receiver 910 may be stored in the memory 920.

In one embodiment, the memory 920 may be divided into a first memory for storing an input feature map and a second memory for storing binary weight values, other real number parameters, and model structure definition variables. Meanwhile, binary weight values stored in the memory 920 may be values obtained by converting initial weight values (e.g., 32-bit floating point numbers) for which learning (or training) of the neural network is completed.

The temporal domain binary vector generator 930 may receive an input feature map from the memory 920. The temporal domain binary vector generator 930 may convert the input feature map into temporal domain binary vectors. The input feature map may include a plurality of input activations, and the temporal domain binary vector generator 930 may convert each of the multiple input activations into a temporal domain binary vector.

In detail, the temporal domain binary vector generator 930 may convert the input feature map into a plurality of temporal domain binary vectors based on quantization levels. In an embodiment, when a range between the maximum value and the minimum value of input activations that may be input to a neural network may be divided into N quantization levels (N is a natural number), the temporal domain binary vector generator 930 may convert an input activation into a temporal domain binary vector having N-1 elements.

The convolution computation unit 940 may receive binary weight values from the memory 920. Also, the convolution computation unit 940 may receive a plurality of temporal domain binary vectors from the temporal domain binary vector generator 930.

The convolution computation unit 940 may include an adder, and the convolution computation unit 940 may perform a convolution computation between binary weight values and a plurality of temporal domain binary vectors.

The neural computation unit 950 may receive the binary weight values and a result of the convolution computation between the binary weight value and the plurality of temporal domain binary vectors from the convolution computation unit 940. Also, the neural computation unit 950 may receive a modified scale value of batch normalization, a bias value of the batch normalization, an activation function, etc. from the memory 920.

Batch normalization and pooling may be performed and an activation function may be applied in the neural computation unit 950. However, computations that may be performed and applied in the neural computation unit 950 are not limited thereto.

Meanwhile, the modified scale value of the batch normalization may be obtained by multiplying the initial scale value by an average value of the absolute values of initial weight values and dividing a result thereof by the number T of elements included in each temporal domain binary vector.

As batch normalization is performed and an activation function is applied in the neural computation unit 950, an output feature map may be output. The output feature map may include a plurality of output activations.

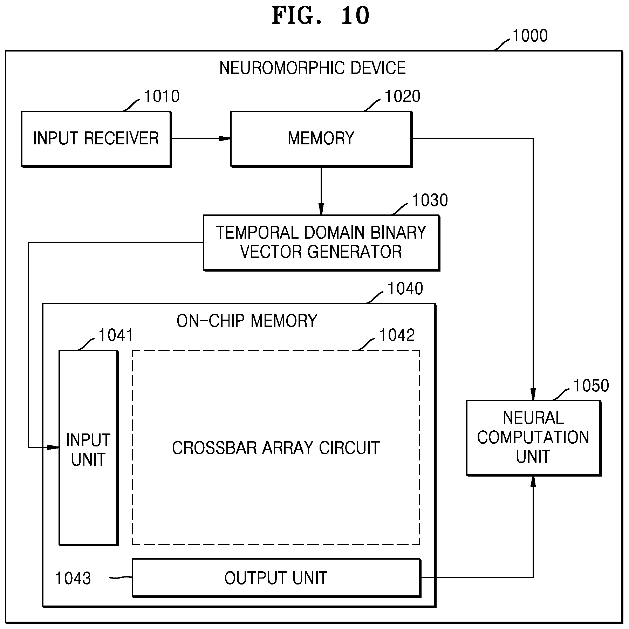

FIG. 10 illustrates a neural network device using an in-memory structure according to one or more embodiments.

Referring to FIG. 10, a neuromorphic device 1000 may include an external input receiver 1010, a memory 1020, a temporal domain binary vector generator 1030, an on-chip memory 1040, and a neural computation unit 1050.

In the neuromorphic device 1000 shown in FIG. 10, components related to the present disclosure are shown. Therefore, it will be apparent after an understanding of the present disclosure that the neuromorphic device 1000 may further include other general-purpose components in addition to the components shown in FIG. 10.

The external input receiver 1010 may receive neural network model related information, input image (or audio) data, etc. from outside the neuromorphic device 1000. Various types of information and data received by the external input receiver 1010 may be stored in the memory 1020.

The memory 1020 may store an input feature map, other real number parameters, model structure definition variables, etc. Binary weight values may be stored in the on-chip memory 1040 instead of (or in addition to) the memory 1020, and further description thereof will be given later below.

The temporal domain binary vector generator 1030 may receive an input feature map from the memory 1020. The temporal domain binary vector generator 1030 may convert the input feature map into temporal domain binary vectors. The input feature map may include a plurality of input activations, and the temporal domain binary vector generator 1030 may convert each of the multiple input activations into a temporal domain binary vector.

In detail, the temporal domain binary vector generator 1030 may convert the input feature map into a plurality of temporal domain binary vectors based on quantization levels. In an embodiment, when a range between the maximum value and the minimum value of input activations that may be input to a neural network may be divided into N quantization levels (N is a natural number), the temporal domain binary vector generator 1030 may convert an input activation into a temporal domain binary vector having N-1 elements.

The on-chip memory 1040 may include an input unit 1041, a crossbar array circuit 1042, and an output unit 1043.

The crossbar array circuit 1042 may include a plurality of synapse circuits (e.g., variable resistors). The binary weight values may be stored in the plurality of synapse circuits. The binary weight values stored in the plurality of synapse circuits may be values obtained by converting initial weight values (e.g., 32-bit floating point numbers) for which learning (or training) of the neural network is completed.

The input unit 1041 may receive a plurality of temporal domain binary vectors from the temporal domain binary vector generator 1030.

When a plurality of temporal domain binary vectors are received by the input unit 1041, the crossbar array circuit 1042 may perform a convolution computation between the binary weight values and the plurality of temporal domain binary vectors.

The output unit 1043 may transmit a result of the convolution computation to the neural computation unit 1050.

The neural computation unit 1050 may receive the binary weight values and a result of the convolution computation between the binary weight value and the plurality of temporal domain binary vectors from the output unit 1043. Also, the neural computation unit 1050 may receive a modified scale value of batch normalization, a bias value of the batch normalization, an activation function, etc. from the memory 1020.

Batch normalization and pooling may be performed and an activation function may be applied in the neural computation unit 1050. However, computations that may be performed and applied in the neural computation unit 1050 are not limited thereto.

Meanwhile, the modified scale value of the batch normalization may be obtained by multiplying the initial scale value by an average value of the absolute values of initial weight values and dividing a result thereof by the number T of elements included in each temporal domain binary vector.

As batch normalization is performed and an activation function is applied in the neural computation unit 1050, an output feature map may be output. The output feature map may include a plurality of output activations.

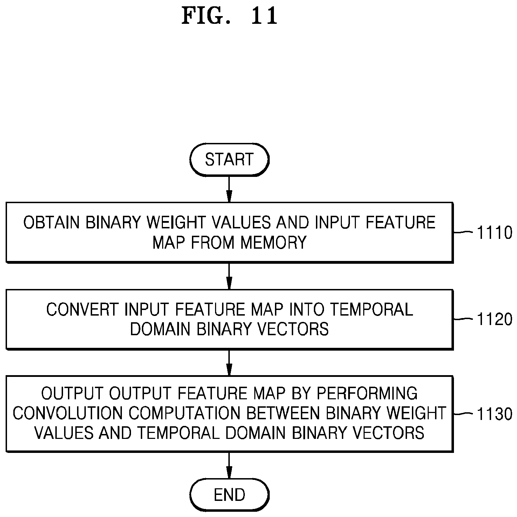

FIG. 11 illustrates a method of implementing a neural network in a neural network device according to one or more embodiments.

Referring to FIG. 11, in operation 1110, the neural network device may obtain binary weight values and an input feature map from a memory.

In operation 1120, the neural network device may convert the input feature map into temporal domain binary vectors.

In an embodiment, the neural network device may convert the input feature map into temporal domain binary vectors based on quantization levels.

Specifically, the neural network device may divide a range between the maximum value and minimum value that may be input to a neural network into N (N is a natural number) quantization levels and, based on quantization levels to which respective activations of the input feature map belong from among the N quantization levels, convert the respective activations to temporal domain binary vectors.

Meanwhile, the neural network device may divide a range between the maximum value and the minimum value that may be input to the neural network into linear quantization levels or non-linear quantization levels.

In operation 1130, the neural network device may output an output feature map by performing a convolution computation between the binary weight values and the temporal domain binary vectors.

The neural network device may output an output feature map by performing batch normalization on a result of the convolution computation.

In an embodiment, the neural network device may obtain a modified scale value by multiplying the initial scale value of batch normalization by an average value of the absolute values of initial weight values and dividing a result thereof by the number of elements included in each temporal domain binary vector. The neural network device may perform batch normalization based on the modified scale value.

The neural network device may perform a multiplication computation for multiplying each of bias values applied to the neural network by the initial scale value and reflect a result of the multiplication computation to the output feature map.

The neural network device may output an output feature map by performing batch normalization on a result of the convolution computation and applying an activation function to a result of the batch normalization.

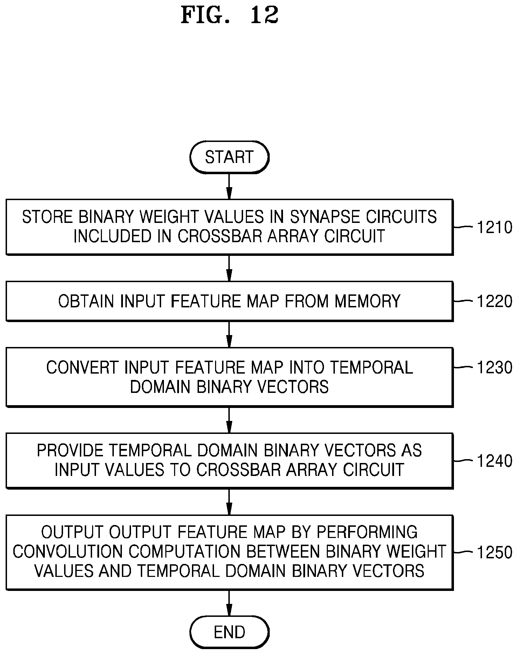

FIG. 12 illustrates a method of implementing a neural network in a neuromorphic device according to one or more embodiments.

Referring to FIG. 12, in operation 1210, the neuromorphic device may store binary weight values in synapse circuits included in a crossbar array circuit.

In operation 1220, the neuromorphic device may obtain an input feature map from a memory.

In operation 1230, the neuromorphic device may convert the input feature map into temporal domain binary vectors.

In an embodiment, the neuromorphic device may convert the input feature map into temporal domain binary vectors based on quantization levels.

Specifically, the neuromorphic device may divide a range between the maximum value and minimum value that may be input to a neural network into N (N is a natural number) quantization levels and, based on quantization levels to which respective activations of the input feature map belong from among the N quantization levels, convert the respective activations to temporal domain binary vectors.

Meanwhile, the neuromorphic device may divide a range between the maximum value and the minimum value that may be input to the neural network into linear quantization levels or non-linear quantization levels.

In operation 1240, the neuromorphic device may provide the temporal domain binary vectors as input values of the crossbar array circuit.

In operation 1250, the neuromorphic device may output an output feature map by performing a convolution computation between the binary weight values and the temporal domain binary vectors.

The neuromorphic device may output an output feature map by performing batch normalization on a result of the convolution computation.

In an embodiment, the neuromorphic device may obtain a modified scale value by multiplying the initial scale value of batch normalization by an average value of the absolute values of initial weight values and dividing a result thereof by the number of elements included in each temporal domain binary vector. The neuromorphic device may perform batch normalization based on the modified scale value.

The neuromorphic device may perform a multiplication computation for multiplying each of bias values applied to the neural network by the initial scale value and reflect a result of the multiplication computation to the output feature map.

The neuromorphic device may output an output feature map by performing batch normalization on a result of the convolution computation and applying an activation function to a result of the batch normalization.

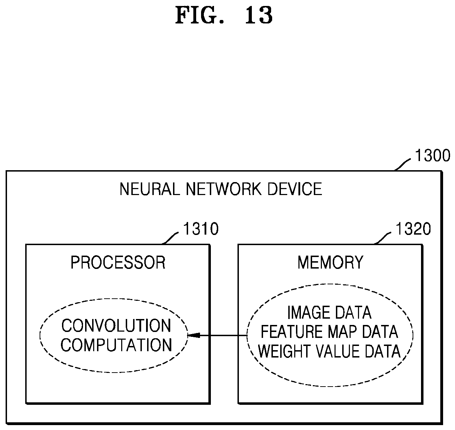

FIG. 13 illustrates a neural network device according to one or more embodiments.

The neural network device 1300 may be implemented as various types of devices, such as a personal computer (PC), a server device, a mobile device, and an embedded device. In detail, for example, the neural network device 1300 may be a smartphone, a tablet device, an augmented reality (AR) device, an Internet of Things (IoT) device, an autonomous vehicle, robotics, medical devices, etc. that performs voice recognition, image recognition, image classification, etc. by using a neural network. However, the present disclosure is not limited thereto. Furthermore, the neural network device 1300 may correspond to a dedicated hardware accelerator mounted on a device as stated above. The neural network device 1300 may be a hardware accelerator like a neural processing unit (NPU), a tensor processing unit (TPU), or a neural engine, which is a dedicated module for driving a neural network, but is not limited thereto. In non-limiting examples, the neural network device 1300 may correspond to or include either one or both of the neural network device 900 and the neuromorphic device 1000.

Referring to FIG. 13, the neural network device 1300 may include a processor 1310 (e.g., one or more processors) and a memory 1320 (e.g., one or more memories). In the neural network device 1300 shown in FIG. 13, components related to the present disclosure are shown. Therefore, it will be apparent after an understanding of the present disclosure that the neural network device 1300 may further include other general-purpose components in addition to the components shown in FIG. 13.

The processor 1310 may control overall functions for operating the neural network device 1300. For example, the processor 1310 may control the neural network device 1300 overall by executing programs stored in the memory 1320 in the neural network device 1300. The processor 1310 may be implemented as a central processing unit (CPU), a graphics processing unit (GPU), an application processor (AP), etc. included in the neural network device 1300, but is not limited thereto.

The memory 1320 is a hardware component that stores various types of data processed in the neural network device 1300. For example, the memory 1320 may store data processed in the neural network device 1300 and data to be processed. Also, the memory 1320 may store applications, drivers, etc. to be executed by the neural network device 1300. The memory 1320 may include a random access memory (RAM), such as a dynamic random access memory (DRAM) and a static random access memory (SRAM), a read-only memory (ROM), an electrically erasable programmable read-only memory (EEPROM), a CD- ROM, a Blu-ray or another optical disc storage, a hard disk drive (HDD), a solid state drive (SSD), or a flash memory.

The processor 1310 may read/write neural network data, such as image data, feature map data, and weight value data, from/to the memory 1320 and executes a neural network by using data that is read/written. When the neural network is executed, the processor 1310 repeatedly performs a convolution computation between the input feature map and weight values to generate data regarding an output feature map. At this time, a computation amount of the convolution computation may be determined based on various factors, such as the number of channels of an input feature map, the number of channels of weight values, the size of the input feature map, the size of the weight values, and precision of values.

An actual neural network driven by the neural network device 1300 may be implemented with a more complex architecture. Accordingly, the processor 1310 may perform computations of a very large operation counts ranging from hundreds of millions to tens of billions, and thus it is inevitable that the frequency of accessing the memory 1320 by the processor 1310 for computations increases dramatically. Due to such a burden of computations, a typical neural network may not be processed smoothly in mobile devices like smartphones, tablets, wearable devices, etc. and embedded devices having relatively low processing power.

The processor 1310 may perform convolution computation, batch normalization computation, pooling computation, activation function computation, etc. In an embodiment, the processor 1310 may perform matrix multiplication computation, conversion computation, and transposition computation to obtain multi-head self attention. In the process of obtaining multi-head self attention, conversion computation and transposition computation may be performed after or before matrix multiplication computation.

The processor 1310 may obtain binary weight values and an input feature map from the memory 1320 and convert the input feature map into temporal domain binary vectors. Also, the processor 1310 may output an output feature map by performing a convolution computation between the binary weight values and the temporal domain binary vectors, thereby reducing operation counts in implementing the neural network to reduce such burden.

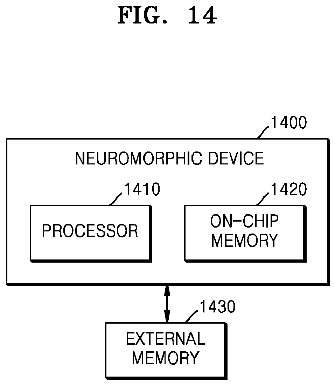

FIG. 14 illustrates a neuromorphic device according to one or more embodiments.

Referring to FIG. 14, a neuromorphic device 1400 may include a processor 1410 (e.g., one or more processors) and an on-chip memory 1420 (e.g., one or more memories). In the neuromorphic device 1400 shown in FIG. 14, components related to the present disclosure are shown. Therefore, it will be apparent after an understanding of the present disclosure that the neuromorphic device 1400 may further include other general-purpose components in addition to the components shown in FIG. 14.

The neuromorphic device 1400 may be mounted on digital systems that needs a low-power neural network, such as smartphones, drones, tablet devices, augmented reality (AR) devices, Internet of Things (IoT) devices, autonomous vehicles, robotics, medical devices, etc. However, the present disclosure is not limited thereto. In non-limiting examples, the neuromorphic device 1400 may correspond to or include either one or both of the neural network device 900 and the neuromorphic device 1000.

The neuromorphic device 1400 may include a plurality of on-chip memories 1420, and each of the on-chip memory 1420 may include a plurality of crossbar array circuits. The crossbar array circuit may include a plurality of pre-synaptic neurons, a plurality of post-synaptic neurons, and synapse circuits providing connections between the plurality of pre-synaptic neurons and the plurality of post-synaptic neurons, that is, memory cells. In an embodiment, the crossbar array circuit may be implemented as a RCA.

An external memory 1430 (e.g., one or more memories) is a hardware component that stores various types of data processed in the neuromorphic device 1400. For example, the external memory 1430 may store data processed in the neuromorphic device 1400 and data to be processed. Also, the external memory 1430 may store applications, drivers, etc. to be executed by the neuromorphic device 1400. The external memory 1430 may include a random access memory (RAM), such as a dynamic random access memory (DRAM) and a static random access memory (SRAM), a read-only memory (ROM), an electrically erasable programmable read-only memory (EEPROM), a CD- ROM, a Blu-ray or another optical disc storage, a hard disk drive (HDD), a solid state drive (SSD), or a flash memory.

The processor 1410 may control overall functions for operating the neuromorphic device 1400. For example, the processor 1410 controls the neuromorphic device 1400 overall by executing programs stored in the on-chip memory 1420 in the neuromorphic device 1400. The processor 1410 may be implemented as a central processing unit (CPU), a graphics processing unit (GPU), an application processor (AP), etc. included in the neuromorphic device 1400, but is not limited thereto. The processor 1410 may read/write various data from/to the external memory 1430 and executes the neuromorphic device 1400 by using data that is read/written.

The processor 1410 may generate a plurality of binary feature maps by binarizing pixel values of the input feature map based on a plurality of threshold values. The processor 1410 may provide pixel values of the plurality of binary feature maps as input values of the crossbar array circuit. The processor 1410 may convert the pixel values into an analog signal (voltage) using a DAC.

The processor 1410 may store weight values to be applied to the crossbar array circuit in synapse circuits included in the crossbar array circuit. The weight values stored in the synapse circuits may be conductance. Also, the processor 1410 may obtain output values of the crossbar array circuit by performing a multiplication computation between an input value and kernel values stored in the synapse circuits.

The processor 1410 may generate pixel values of an output feature map by merging output values calculated by the crossbar array circuit. Meanwhile, since the output values calculated by the crossbar array circuit (or result values obtained by multiplying the calculated output values by a weight value) are in the form of an analog signal (current), the processor 1410 may convert the output values into a digital signal by using an ADC. Also, the processor 1410 may apply an activation function to output values converted into digital signals by the ADC.

The processor 1410 may store binary weight values in synapse circuits included in the crossbar array circuit and obtain an input feature map from an external memory 1630. Also, the processor 1410 may convert the input feature map into temporal domain binary vectors and provide the temporal domain binary vectors as input values of the crossbar array circuit. Also, the processor 1410 may output an output feature map by performing a convolution computation between the binary weight values and the temporal domain binary vectors.

Furthermore, in the present specification, a "unit" is a hardware component like a processor or a circuit and/or an instruction executed by such hardware configuration like a processor.

According to the above-described embodiments of the present disclosure, by using binary weight values and temporal domain binary vectors may be used to reduce a neural network model size and an operation count, thereby reducing a memory used, and an operation count performed, by a neuromorphic and/or neural network device of one or more embodiments implementing the neural network.

Also, according to another embodiment of the present disclosure, by performing a time axis XNOR computation between binary weight values and temporal domain binary vectors, learning (or training) performance and final classification/recognition accuracy at levels similar to those of a neural network using multi-bit data may be secured.

The lines, input nodes, neuron circuits, synapse circuits, first row lines, second row lines, third row lines, fourth row lines, first column lines, second column lines, third column lines, fourth column line 22D, DACs, ADCs, activation units, crossbar array circuits, neural network devices, external input receivers, memories, temporal domain binary vector generators, convolution computation units, neural computation units, neuromorphic devices, on-chip memories, input units, output units, processors, external memories, line 21, line 22, input node 210, neuron circuit 220, synapse circuit 230, first row line 21A, second row line 21B, third row line 21C, fourth row line 21D, first column line 22A, second column line 22B, third column line 22C, fourth column line 22D, synapse circuits 230A and 230B, DAC 420, ADC 430, activation unit 440, crossbar array circuit 400, crossbar array circuit 450, neural network device 900, external input receiver 910, memory 920, temporal domain binary vector generator 930, convolution computation unit 940, neural computation unit 950, neuromorphic device 1000, memory 1020, temporal domain binary vector generator 1030, on-chip memory 1040, neural computation unit 1050, input unit 1041, crossbar array circuit 1042, output unit 1043, neural network device 1300, processor 1310, memory 1320, neuromorphic device 1400, processor 1410, on-chip memory 1420, external memory 1430, and other apparatuses, devices, units, modules, and components described herein with respect to FIGS. 1-12 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-12 that perform the operations described in this application are performed by computing hardware, for example, by one or more processors or computers, implemented as described above executing instructions or software to perform the operations described in this application that are performed by the methods. Forexample, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions used herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

**The following is a list of further preferred embodiments of the invention:**

Embodiment 1. A neural network-implementing neuromorphic device, the neuromorphic device comprising:

a memory configured to store one or more instructions;
an on-chip memory comprising a crossbar array circuit including synapse circuits; and one or more processors configured to, by executing instructions to drive a neural network,

store binary weight values of the neural network in the synapse circuits,
obtain an input feature map from the memory,
convert the input feature map into temporal domain binary vectors,
provide the temporal domain binary vectors as input values of the crossbar array circuit, and
output an output feature map by performing, using the crossbar array circuit, a convolution computation between the binary weight values and the temporal domain binary vectors.

Embodiment 2. The device of embodiment 1, wherein, for the outputting of the output feature map, the one or more processors are further configured to output the output feature map by performing batch normalization on a result of the convolution computation.

Embodiment 3. The device of embodiment 2, wherein, for the performing of the batch normalization, the one or more processors are further configured to
calculate a modified scale value by multiplying an initial scale value of the batch normalization by an average value of absolute values of initial weight values and dividing a result thereof by a number of elements included in each temporal domain binary vector, and
perform the batch normalization based on the modified scale value.

Embodiment 4. The device of embodiment 3, wherein, for the converting of the input feature map, the one or more processors are further configured to convert the input feature map into the temporal domain binary vectors based on quantization levels of the input feature map.

Embodiment 5. The device of embodiment 4, wherein, for the converting of the input feature map, the one or more processors are further configured to
divide a range between a maximum value and a minimum value determined for the temporal domain binary vectors to be input to the neural network by N quantization levels, wherein N is a natural number, and
convert activations of the input feature map into the temporal domain binary vectors based on the quantization levels to which the activations correspond.

Embodiment 6. The device of embodiment 5, wherein, for the dividing of the range, the one or more processors are further configured to divide the range between the maximum value and the minimum value into non-linear quantization levels.

Embodiment 7. The device of embodiment 3, wherein, for the outputting of the output feature map, the one or more processors are further configured to
perform a multiplication computation by multiplying each of bias values of the neural network by the initial scale value, and
outputting the output feature map by determining the output feature map based on a result of the multiplication computation.

Embodiment 8. The device of embodiment 3, wherein, for the outputting of the output feature map, the one or more processors are further configured to output the output feature map by performing the batch normalization on a result of the convolution computation and applying an activation function to a result of the batch normalization.

Embodiment 9. A neural network device, the neural network device comprising:

a memory configured to store one or more instructions; and
one or more processors configured to, by executing instructions to drive a neural network,

obtain binary weight values of the neural network and an input feature map from the memory,
convert the input feature map into temporal domain binary vectors, and
output an output feature map by performing a convolution computation between the binary weight values and the temporal domain binary vectors.

Embodiment 10. The device of embodiment 9, wherein, for the outputting of the output feature map, the one or more processors are further configured to output the output feature map by performing batch normalization on a result of the convolution computation.

Embodiment 11. The device of embodiment 10, wherein, for the performing of the batch normalization, the one or more processors are further configured to
calculate a modified scale value by multiplying an initial scale value of the batch normalization by an average value of absolute values of initial weight values and dividing a result thereof by a number of elements included in each temporal domain binary vector, and
perform the batch normalization based on the modified scale value.

Embodiment 12. The device of embodiment 11, wherein, for the converting of the input feature map, the one or more processors are further configured to convert the input feature map into the temporal domain binary vectors based on quantization levels of the input feature map.

Embodiment 13. The device of embodiment 12, wherein, for the converting of the input feature map, the one or more processors are further configured to
divide a range between a maximum value and a minimum value determined for the temporal domain binary vectors to be input to the neural network N quantization levels, wherein N is a natural number, and
convert activations of the input feature map into the temporal domain binary vectors based on the quantization levels to which the activations correspond.

Embodiment 14. The device of embodiment 12, wherein, for the dividing of the range, the one or more processors are further configured to divide the range between the maximum value and the minimum value into non-linear quantization levels.

Embodiment 15. The device of embodiment 11, wherein, for the outputting of the output feature map, the one or more processors are further configured to
perform a multiplication computation by multiplying each of bias values applied to the neural network by the initial scale value, and
outputting the output feature map by determining the output feature map based on a result of the multiplication computation.

Embodiment 16. The device of embodiment 11, wherein, for the outputting of the output feature map, the one or more processors are further configured to output the output feature map by performing the batch normalization on a result of the convolution computation and applying an activation function to a result of the batch normalization.

Embodiment 17. The device of embodiment 9, wherein
the device is a neuromorphic device further comprising an on-chip memory comprising a crossbar array circuit including synapse circuits, and
the one or more processors are configured to

store the binary weight values in the synapse circuits,
provide the temporal domain binary vectors as input values of the crossbar array circuit, and
for the outputting of the output feature map, perform the convolution computation using the crossbar array circuit.

Embodiment 18. A processor-implemented method of implementing a neural network in a neuromorphic device, the method comprising:

storing binary weight values of a neural network in synapse circuits included in a crossbar array circuit in the neuromorphic device;
obtaining an input feature map from a memory in the neuromorphic device;
converting the input feature map into temporal domain binary vectors;

providing the temporal domain binary vectors as input values to the crossbar array circuit; and
outputting an output feature map by performing, using the crossbar array circuit, a convolution computation between the binary weight values and the temporal domain binary vectors.

Embodiment 19. A non-transitory computer-readable storage medium storing instructions that, when executed by one or more processors, configure the one or more processors to perform the method of embodiment 18.

Embodiment 20. A processor-implemented method of implementing a neural network in a neural network device, the method comprising:

obtaining binary weight values of a neural network and an input feature map from a memory;
converting the input feature map into temporal domain binary vectors; and
outputting an output feature map by performing a convolution computation between the binary weight values and the temporal domain binary vectors.

Embodiment 21. The method of embodiment 20, further comprising:

storing the binary weight values in synapse circuits included in a crossbar array circuit in the neural network device, wherein the device is a neuromorphic device;
providing the temporal domain binary vectors as input values to the crossbar array circuit; and
performing the convolution computation using the crossbar array circuit.

Embodiment 22. A non-transitory computer-readable storage medium storing instructions that, when executed by one or more processors, configure the one or more processors to perform the method of embodiment 20.

Embodiment 23. A neural network-implementing neuromorphic device, the neuromorphic device comprising:

a resistive crossbar memory array, RCA, including synapse circuits; and
one or more processors configured to

store weight values of a neural network in the synapse circuits,
convert an input feature map into temporal domain binary vectors, and
generate an output feature map by performing, using the RCA, a convolution between the weight values and the temporal domain binary vectors.

Embodiment 24. The device of embodiment 23, wherein, for the converting of the input feature map, the one or more processors are configured to generate one of the temporal domain binary vectors by converting an input activation of the input feature map into elements of either a maximum or a minimum binary value.

Embodiment 25. The device of embodiment 24, wherein a temporal sequence of the maximum binary values and the minimum binary values of the generated temporal domain binary vector is determined based on a quantization level of the input activation.

Embodiment 26. The device of embodiment 23, wherein, for the storing of the weight values, the one or more processors are configured to:

convert initial weight values into binary weight values;
generate the weight values by multiplying the binary weight values by an average value of absolute values of the initial weight values; and
store the weight values in the synapse circuits.

Embodiment 27. The device of embodiment 26, wherein the initial weight values are of connections between nodes of a previous layer of the neural network and a node of a current layer of the neural network.

Embodiment 28. The device of embodiment 23, wherein
the device is any one of a personal computer, PC, a server device, a mobile device, and a smart device,
the input feature map corresponds to either one of input image data and input audio data, and
the one or more processors are configured to perform any one of image recognition, image classification, and voice recognition based on the generated output feature map.

Embodiment 29. A processor-implemented method of implementing a neural network in a neuromorphic device, the method comprising:

storing weight values of a neural network in synapse circuits of a resistive crossbar memory array, RCA;
converting an input feature map into temporal domain binary vectors; and
generating an output feature map by performing, using the crossbar array circuit, a convolution between the binary weight values and the temporal domain binary vectors.

**Claims**

1. A neural network device, the neural network device comprising:

a memory configured to store one or more instructions; and
one or more processors configured to, by executing instructions to drive a neural network,

obtain binary weight values of the neural network and an input feature map from the memory,
convert the input feature map into temporal domain binary vectors, and
output an output feature map by performing a convolution computation between the binary weight values and the temporal domain binary vectors.

2. The device of claim 1, wherein, for the outputting of the output feature map, the one or more processors are further configured to output the output feature map by performing batch normalization on a result of the convolution computation.

3. The device of claim 2, wherein, for the performing of the batch normalization, the one or more processors are further configured to
calculate a modified scale value by multiplying an initial scale value of the batch normalization by an average value of absolute values of initial weight values and dividing a result thereof by a number of elements included in each temporal domain binary vector, and
perform the batch normalization based on the modified scale value.

4. The device of claim 3, wherein, for the converting of the input feature map, the one or more processors are further configured to convert the input feature map into the temporal domain binary vectors based on quantization levels of the input feature map.

5. The device of claim 4, wherein, for the converting of the input feature map, the one or more processors are further configured to divide a range between a maximum value and a minimum value determined for the temporal domain binary vectors to be input to the neural network N quantization levels, wherein N is a natural number, and convert activations of the input feature map into the temporal domain binary vectors based on the quantization levels to which the activations correspond, or
wherein, for the dividing of the range, the one or more processors are further configured to divide the range between the maximum value and the minimum value into non-linear quantization levels.

6. The device of claim 3, wherein, for the outputting of the output feature map, the one or more processors are further configured to
perform a multiplication computation by multiplying each of bias values applied to the neural network by the initial scale value, and
outputting the output feature map by determining the output feature map based on a result of the multiplication computation.

7. The device of claim 3, wherein, for the outputting of the output feature map, the one or more processors are further configured to output the output feature map by performing the batch normalization on a result of the convolution computation and applying an activation function to a result of the batch normalization.

8. The device of one of claims 1 to 7, wherein

the device is a neuromorphic device further comprising an on-chip memory comprising a crossbar array circuit including synapse circuits, and
the one or more processors are configured to

store the binary weight values in the synapse circuits,
provide the temporal domain binary vectors as input values of the crossbar array circuit, and
for the outputting of the output feature map, perform the convolution computation using the crossbar array circuit.

9. A processor-implemented method of implementing a neural network in a neuromorphic device, the method comprising:

storing binary weight values of a neural network in synapse circuits included in a crossbar array circuit in the neuromorphic device;
obtaining an input feature map from a memory in the neuromorphic device;
converting the input feature map into temporal domain binary vectors;
providing the temporal domain binary vectors as input values to the crossbar array circuit; and
outputting an output feature map by performing, using the crossbar array circuit, a convolution computation between the binary weight values and the temporal domain binary vectors.

10. A non-transitory computer-readable storage medium storing instructions that, when executed by one or more processors, configure the one or more processors to perform a processor-implemented method of implementing a neural network in a neuromorphic device, the method comprising:

storing weight values of a neural network in synapse circuits of a resistive crossbar memory array, RCA;
converting an input feature map into temporal domain binary vectors; and
generating an output feature map by performing, using the crossbar array circuit, a convolution between the binary weight values and the temporal domain binary vectors.

11. The computer-readable storage medium of claim 10, wherein, for the converting of the input feature map, the one or more processors are configured to generate one of the temporal domain binary vectors by converting an input activation of the input feature map into elements of either a maximum or a minimum binary value.

12. The computer-readable storage medium of claim 11, wherein a temporal sequence of the maximum binary values and the minimum binary values of the generated temporal domain binary vector is determined based on a quantization level of the input activation.

13. The computer-readable storage medium of one of claims 10 to 12, wherein, for the storing of the weight values, the one or more processors are configured to:

convert initial weight values into binary weight values;
generate the weight values by multiplying the binary weight values by an average value of absolute values of the initial weight values; and
store the weight values in the synapse circuits.

14. The computer-readable storage medium of claim 13, wherein the initial weight values are of connections between nodes of a previous layer of the neural network and a node of a current layer of the neural network.

15. The computer-readable storage medium of one of claims 10 to 14, wherein
the device is any one of a personal computer, PC, a server device, a mobile device, and a smart device,
the input feature map corresponds to either one of input image data and input audio data, and
the one or more processors are configured to perform any one of image recognition, image classification, and voice recognition based on the generated output feature map.

# FIG. 1

FIG. 2A

# FIG. 2B

# FIG. 3A

$$Y_k = \sum_{i=1}^{n} W_{ik} * X_1$$

310 311

$$
\begin{bmatrix} X_1 \\ X_2 \\ \cdot \\ \cdot \\ \cdot \\ X_n \end{bmatrix}^T
\begin{bmatrix} W_{11} & W_{12} & \cdots & W_{1m} \\ W_{21} & W_{22} & \cdots & W_{2m} \\ \cdot & \cdot & \cdot & \cdot \\ \cdot & \cdot & \cdot & \cdot \\ \cdot & \cdot & \cdot & \cdot \\ W_{n1} & W_{n2} & \cdots & W_{nm} \end{bmatrix}
$$

$$\parallel$$

312

$$\begin{bmatrix} Y_1 & Y_2 & \cdots & Y_m \end{bmatrix}$$

# FIG. 3B

$$I_k = \sum_{i=1}^{n} G_{ik} * V_i$$

FIG. 4

EP 3 923 201 A1

FIG. 5

EP 3 923 201 A1

FIG. 6A

FIG. 6B

610

620

630

$$
\begin{pmatrix} W_{11} & W_{21} & W_{31} \\ W_{12} & W_{22} & W_{32} \\ W_{13} & W_{23} & W_{33} \end{pmatrix} \Rightarrow \begin{pmatrix} W'_{11} & W'_{21} & W'_{31} \\ W'_{12} & W'_{22} & W'_{32} \\ W'_{13} & W'_{23} & W'_{33} \end{pmatrix} \times \begin{pmatrix} \dfrac{\sum_{n=1}^{3}|W_{n1}|}{3} & \dfrac{\sum_{n=1}^{3}|W_{n2}|}{3} & \dfrac{\sum_{n=1}^{3}|W_{n3}|}{3} \\ \dfrac{\sum_{n=1}^{3}|W_{n1}|}{3} & \dfrac{\sum_{n=1}^{3}|W_{n2}|}{3} & \dfrac{\sum_{n=1}^{3}|W_{n3}|}{3} \\ \dfrac{\sum_{n=1}^{3}|W_{n1}|}{3} & \dfrac{\sum_{n=1}^{3}|W_{n2}|}{3} & \dfrac{\sum_{n=1}^{3}|W_{n3}|}{3} \end{pmatrix}
$$

FIG. 6C

$$\begin{array}{cccc}
& 610 & & \\
\begin{pmatrix} -0.03 & 0.04 & 0.77 \\ 0.12 & -0.61 & 0.38 \\ -0.24 & 0.09 & 0.54 \end{pmatrix} & \Rightarrow & \begin{pmatrix} -1 & 1 & 1 \\ 1 & -1 & 1 \\ -1 & 1 & 1 \end{pmatrix} & \times & \begin{pmatrix} 0.28 & 0.37 & 0.29 \\ 0.28 & 0.37 & 0.29 \\ 0.28 & 0.37 & 0.29 \end{pmatrix}
\end{array}$$

620

630

# FIG. 7A

| NINE QUANTIZATION LEVELS | TEMPORAL DOMAIN BINARY VECTOR | | | | | | | |
|:---:|:---:|:---:|:---:|:---:|:---:|:---:|:---:|:---:|
| | t1 | t2 | t3 | t4 | t5 | t6 | t7 | t8 |
| 1.0 | +1 | +1 | +1 | +1 | +1 | +1 | +1 | +1 |
| 0.75 | +1 | +1 | +1 | +1 | +1 | +1 | +1 | −1 |
| 0.5 | +1 | +1 | +1 | +1 | +1 | +1 | −1 | −1 |
| 0.25 | +1 | +1 | +1 | +1 | +1 | −1 | −1 | −1 |
| 0 | +1 | +1 | +1 | +1 | −1 | −1 | −1 | −1 |
| −0.25 | +1 | +1 | +1 | −1 | −1 | −1 | −1 | −1 |
| −0.5 | +1 | +1 | −1 | −1 | −1 | −1 | −1 | −1 |
| −0.75 | +1 | −1 | −1 | −1 | −1 | −1 | −1 | −1 |
| −1.0 | −1 | −1 | −1 | −1 | −1 | −1 | −1 | −1 |

# FIG. 7B

# FIG. 8

Weight approximation factor 850

$$S_m = \frac{\sum_{n=1}^{N}|Wn_m|}{N}$$

810

820 Binary connection weights

$$W_{nm}^b = Sign(Wnm)$$

840        860        870

Temporal-domain binary vector generator    +1 +1 +1 +1

-1 -1 -1 -1

$I_1^b(t)$    $\times W_{11}^b$    $X_1$    $S_1 \div T$    $O_1$

Temporal-domain binary vector generator    +1 +1 +1 +1 +1 +1

-1 -1

$I_2^b(t)$    $X_2$    $S_2 \div T$    $O_2$

Temporal-domain binary vector generator    +1

-1 -1 -1 -1 -1 -1 -1

$I_3^b(t)$

Temporal-domain binary vector generator    +1 +1 +1 +1 +1 +1 +1 +1

$I_N^b(t)$    $\times W_{NM}^b$    $X_M$    $S_M \div T$    $O_M$

$I_1$

$I_2$

$I_3$

$I_N$

Full-precision input nodes $I_n(t)$

Binary input nodes $I_n^b(t)$

830

$$X_m = \sum_{n=1}^{N}\sum_{t=1}^{T}I_n^b(t) \times W_{nm}^b$$

Binary MAC neurons

Approximated MAC neurons $O_m = X_m \times S_m \div T$

# FIG. 9

900

NEURAL NETWORK DEVICE

910

EXTERNAL INPUT
RECEIVER

920

MEMORY

930

TEMPORAL
DOMAIN BINARY
VECTOR GENERATOR

940

CONVOLUTION
COMPUTATION UNIT

950

NEURAL
COMPUTATION UNIT

FIG. 10

EP 3 923 201 A1

# FIG. 11

START

OBTAIN BINARY WEIGHT VALUES AND INPUT FEATURE MAP FROM MEMORY — 1110

CONVERT INPUT FEATURE MAP INTO TEMPORAL DOMAIN BINARY VECTORS — 1120

OUTPUT OUTPUT FEATURE MAP BY PERFORMING CONVOLUTION COMPUTATION BETWEEN BINARY WEIGHT VALUES AND TEMPORAL DOMAIN BINARY VECTORS — 1130

END

# FIG. 12

START

STORE BINARY WEIGHT VALUES IN SYNAPSE CIRCUITS INCLUDED IN CROSSBAR ARRAY CIRCUIT — 1210

OBTAIN INPUT FEATURE MAP FROM MEMORY — 1220

CONVERT INPUT FEATURE MAP INTO TEMPORAL DOMAIN BINARY VECTORS — 1230

PROVIDE TEMPORAL DOMAIN BINARY VECTORS AS INPUT VALUES TO CROSSBAR ARRAY CIRCUIT — 1240

OUTPUT OUTPUT FEATURE MAP BY PERFORMING CONVOLUTION COMPUTATION BETWEEN BINARY WEIGHT VALUES AND TEMPORAL DOMAIN BINARY VECTORS — 1250

END

# FIG. 13

NEURAL NETWORK DEVICE 1300

PROCESSOR 1310

CONVOLUTION COMPUTATION

MEMORY 1320

IMAGE DATA
FEATURE MAP DATA
WEIGHT VALUE DATA

# FIG. 14

```
                                              1400
  ┌─────────────────────────────────────────────┐
  │            NEUROMORPHIC DEVICE               │
  │        1410                  1420            │
  │   ┌──────────────┐      ┌──────────────┐     │
  │   │              │      │   ON-CHIP    │     │
  │   │  PROCESSOR   │      │   MEMORY     │     │
  │   └──────────────┘      └──────────────┘     │
  └────────────────────┬────────────────────────┘
                       ↕         1430
                ┌──────────────┐
                │   EXTERNAL   │
                │   MEMORY     │
                └──────────────┘
```

Europäisches
Patentamt

European
Patent Office

Office européen
des brevets

**EUROPEAN SEARCH REPORT**

Application Number

EP 21 15 3747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAAHIN ANGIZI ET AL: "IMC", 20170717; 1077952576 - 1077952576, 17 July 2017 (2017-07-17), pages 1-8, XP058407109, DOI: 10.1145/3183584.3183613 ISBN: 978-1-4503-6442-3 * abstract; figures 3-6 * * paragraphs [0001] - [0004] * | 1-15 | INV. G06N3/04 G06N3/06 |
| X | HYUNGJUN KIM ET AL: "In-memory batch-normalization for resistive memory based binary neural network hardware", 20190121; 1077952576 - 1077952576, 21 January 2019 (2019-01-21), pages 645-650, XP058424650, DOI: 10.1145/3287624.3287718 ISBN: 978-1-4503-6007-4 | 1,2, 8-10,15 | |
| A | * abstract; figures 1-3 * * paragraphs [000I] - [0III] * | 3-7, 11-14 | |
| X | NI LEIBIN ET AL: "An energy-efficient and high-throughput bitwise CNN on sneak-path-free digital ReRAM crossbar", 2017 IEEE/ACM INTERNATIONAL SYMPOSIUM ON LOW POWER ELECTRONICS AND DESIGN (ISLPED), IEEE, 24 July 2017 (2017-07-24), pages 1-6, XP033142372, DOI: 10.1109/ISLPED.2017.8009177 [retrieved on 2017-08-11] | 1,2,8-10 | TECHNICAL FIELDS SEARCHED (IPC) G06N |
| A | * abstract; figure 3 * * paragraphs [00II] - [00IV] * | 3-7, 11-15 | |

-/--

The present search report has been drawn up for all claims

| Place of search | Date of completion of the search | Examiner |
|---|---|---|
| Munich | 19 October 2021 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 21 15 3747

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rastegari Mohammad ET AL: "XNOR-Net: ImageNet Classification Using Binary Convolutional Neural Networks : 14th European Conference, Amsterdam, The Netherlands, October 11-14, 2016, Proceedings, Part IV" In: "XNOR-Net: ImageNet Classification Using Binary Convolutional Neural Networks : 14th European Conference, Amsterdam, The Netherlands, October 11-14, 2016, Proceedings, Part IV", 9 May 2016 (2016-05-09), XP055843447, pages 1-17, DOI: 10.1007/978-3-319-46493-0_32, Retrieved from the Internet: URL:https://arxiv.org/pdf/1603.05279v3.pdf > | 1,2 | |
| A | * abstract; figure 3 * <br> * paragraph [0003] * <br> ----- | 3-15 | |
| | | | TECHNICAL FIELDS SEARCHED (IPC) |

The present search report has been drawn up for all claims

| Place of search | Date of completion of the search | Examiner |
|---|---|---|
| Munich | 19 October 2021 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)